# EUROPEAN PATENT APPLICATION

(11) **EP 4 845 278 A1**
(43) Date of publication of application: **25.11.2026**
(21) Application number: 24923417.0
(22) Date of filing: 30.10.2024
(51) Int. Cl.: H04W 72/23

(54) **COMMUNICATION METHOD AND COMMUNICATION APPARATUS**

(30) Priority: 06.02.2024 CN 202410174010
(71) Applicant: Huawei Technologies Co., Ltd., Shenzhen, Guangdong 518129 (CN)
(72) Inventor: HU, Dan, Shenzhen, Guangdong 518129 (CN); LIU, Liehai, Shenzhen, Guangdong 518129 (CN); GUO, Zhiheng, Shenzhen, Guangdong 518129 (CN)
(74) Representative: Huawei European IPR
(86) International application number: PCT/CN2024/128313
(87) International publication number: WO 2025/167213

(57) **Abstract**

This application provides a communication method, including: A terminal device and a network device may determine, based on a first correspondence and a transmission bandwidth, a channel bandwidth corresponding to the transmission bandwidth, and determine a guard band based on the channel bandwidth and a second correspondence. The second correspondence includes a one-to-one correspondence between a plurality of channel bandwidths and a plurality of guard bands, and the plurality of guard bands respectively corresponding to the plurality of channel bandwidths monotonically non-decrease as the channel bandwidths increase.

## Description

This application claims priority to Chinese Patent Application No. 202410174010.0, filed with the China National Intellectual Property Administration on February 6, 2024 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

In a new radio (new radio, NR) system, two large frequency ranges, namely, sub 6 gigahertz (sub 6 GHz) and a millimeter wave range, are specified. Different frequency ranges correspond to different maximum bandwidths and subcarrier spacings. For example, in sub 6 GHz, the maximum bandwidth is 100 megahertz (megahertz, MHz), and in the millimeter wave range, the maximum bandwidth is 400 MHz. Some subcarrier spacings (for example, 15 kilohertz (kilohertz, kHz) or 30 kHz) may be used only for sub 6 GHz, some subcarrier spacings (for example, 120 kHz) may be used only for the millimeter wave range, and some subcarrier spacings (for example, 60 kHz) may be used for both sub 6 GHz and the millimeter wave range. The sub 6 GHz range is referred to as frequency range 1 (frequency range 1, FR1).

A plurality of different channel bandwidths (channel bandwidths, CBWs) are defined in the FR1, and each channel bandwidth corresponds to one guard band (guard band, GB). Specifically, a network device may configure a cell-level channel bandwidth through signaling, and after a terminal device accesses the network, the network device configures a bandwidth part (bandwidth part, BWP) for the terminal device. The BWP configured by the network device for the terminal device may be referred to as a channel bandwidth of the terminal device, and the channel bandwidth of the terminal device is less than or equal to the cell-level channel bandwidth. However, a guard band corresponding to the channel bandwidth of the terminal device may be greater than a guard band of the cell-level channel bandwidth. As a result, the channel bandwidth of the terminal device may exceed a cell-level channel bandwidth range, and the terminal device cannot access the cell.

### SUMMARY

This application provides a communication method, enabling a terminal device to access a cell when a channel bandwidth of the terminal device is less than a cell-level channel bandwidth.

According to a first aspect, a communication method is provided. The method may be performed by a terminal device, or may be performed by a chip, a circuit, or the like. This is not limited in this application.

The communication method includes: receiving a first message, where the first message indicates a first subcarrier spacing and a first transmission bandwidth, and the first transmission bandwidth corresponds to the first subcarrier spacing; receiving a second message, where the second message indicates the first subcarrier spacing and a second transmission bandwidth, and the second transmission bandwidth corresponds to the first subcarrier spacing; determining a first channel bandwidth based on the first transmission bandwidth and a first correspondence, and determining a second channel bandwidth based on the second transmission bandwidth and the first correspondence, where the first correspondence includes a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2; and determining a first guard band based on the first channel bandwidth and a second correspondence, and determining a second guard band based on the second channel bandwidth and the second correspondence, where the second correspondence includes a one-to-one correspondence between any one of the M channel bandwidths and one of M guard bands, and the first guard band and the second guard band are two of the M guard bands, where the first channel bandwidth is less than the second channel bandwidth, and the first guard band is less than or equal to the second guard band.

Based on the foregoing technical solution, an example in which an execution body is the terminal device is used. After receiving the first message indicating the first transmission bandwidth and the first subcarrier spacing, and the second message indicating the second transmission bandwidth and a second subcarrier spacing, the terminal device may determine, based on the predefined (for example, protocol-predefined) first correspondence, channel bandwidths corresponding to different transmission bandwidths, and determine, based on the determined channel bandwidths and the predefined (for example, protocol-predefined) second correspondence, guard bands corresponding to the different channel bandwidths. In this technical solution, the first channel bandwidth is less than the second channel bandwidth. At the first carrier spacing, the first guard band corresponding to the first channel bandwidth is less than or equal to the second guard band corresponding to the second channel bandwidth. To be specific, in the second correspondence indicating a one-to-one correspondence between different channel bandwidths and guard bands, the guard bands corresponding to the channel bandwidths satisfy a monotonic non-decrease rule as the channel bandwidths increase. Therefore, it is avoided that when a channel bandwidth of the terminal device is less than a cell-level channel bandwidth, because a guard band corresponding to the channel bandwidth of the terminal device is greater than a guard band corresponding to the cell-level channel bandwidth, the terminal device cannot access a cell.

According to a second aspect, a communication method is provided. The method may be performed by a network device, or may be performed by a chip, a circuit, or the like. This is not limited in this application.

The communication method includes: sending a first message, where the first message indicates a first subcarrier spacing and a first transmission bandwidth, and the first transmission bandwidth corresponds to the first subcarrier spacing; sending a second message, where the second message indicates the first subcarrier spacing and a second transmission bandwidth, and the second transmission bandwidth corresponds to the first subcarrier spacing; determining a first channel bandwidth based on the first transmission bandwidth and a first correspondence, and determining a second channel bandwidth based on the second transmission bandwidth and the first correspondence, where the first correspondence includes a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2; and determining a first guard band based on the first channel bandwidth and a second correspondence, and determining a second guard band based on the second channel bandwidth and the second correspondence, where the second correspondence includes a one-to-one correspondence between any one of the M channel bandwidths and one of M guard bands, and the first guard band and the second guard band are two of the M guard bands, where the first channel bandwidth is less than the second channel bandwidth, and the first guard band is less than or equal to the second guard band.

Based on the foregoing technical solution, an example in which an execution body is the network device is used. After sending, to a terminal device, the first message indicating the first transmission bandwidth and the first subcarrier spacing, and the second message indicating the second transmission bandwidth and a second subcarrier spacing, the network device may determine, based on the predefined (for example, protocol-predefined) first correspondence, channel bandwidths corresponding to different transmission bandwidths, and determine, based on the determined channel bandwidths and the predefined (for example, protocol-predefined) second correspondence, guard bands corresponding to the different channel bandwidths. In this technical solution, in the second correspondence indicating a one-to-one correspondence between different channel bandwidths and guard bands, the guard bands corresponding to the channel bandwidths satisfy a monotonic non-decrease rule as the channel bandwidths increase. Therefore, it is avoided that when a channel bandwidth of the terminal device is less than a cell-level channel bandwidth, because a guard band corresponding to the channel bandwidth of the terminal device is greater than a guard band corresponding to the cell-level channel bandwidth, the terminal device cannot access a cell.

With reference to the first aspect or the second aspect, in some implementations of the first aspect or the second aspect, that the first correspondence includes the one-to-one correspondence between the any one of the M transmission bandwidths and the one of the M channel bandwidths includes: The first correspondence includes, at the first subcarrier spacing, the one-to-one correspondence between the any one of the M transmission bandwidths and the one of the M channel bandwidths.

The one-to-one correspondence between the any one of the M transmission bandwidths and the one of the M channel bandwidths is, at the first subcarrier spacing, the one-to-one correspondence between the any one of the M transmission bandwidths and the one of the M channel bandwidths. Because there may be at least one subcarrier spacing, it is limited that at a same subcarrier spacing, the any one of the M transmission bandwidths is in one-to-one correspondence with the one of the M channel bandwidths.

Based on the foregoing technical solution, the first correspondence includes, at different subcarrier spacings, a one-to-one correspondence between different transmission bandwidths and different channel bandwidths, and each transmission bandwidth corresponds to one channel bandwidth.

With reference to the first aspect or the second aspect, in some implementations of the first aspect or the second aspect, that the second correspondence includes the one-to-one correspondence between the any one of the M channel bandwidths and the one of the M guard bands includes: The second correspondence includes the one-to-one correspondence between the any one of the M channel bandwidths and the one of the M guard bands at the first subcarrier spacing.

Based on the foregoing technical solution, the second correspondence includes a one-to-one correspondence between different channel bandwidths and different guard bands at different subcarrier spacings, and each channel bandwidth corresponds to one guard band.

With reference to the first aspect or the second aspect, in some implementations of the first aspect or the second aspect, at the first subcarrier spacing, a maximum channel bandwidth in the M channel bandwidths is a third channel bandwidth, the third channel bandwidth corresponds to a third guard band, and guard bands corresponding to other channel bandwidths in the M channel bandwidths other than the third channel bandwidth are all less than or equal to the third guard band.

Based on the foregoing technical solution, that at the first subcarrier spacing, in the second correspondence, the maximum channel bandwidth is the third channel bandwidth may be understood as that the third guard band corresponding to the third channel bandwidth is used as a reference, and the guard band corresponding to the channel bandwidth at the first subcarrier spacing should be less than or equal to the third guard band, so that guard bands corresponding to different channel bandwidths satisfy a monotonic non-decrease rule as the channel bandwidths increase.

With reference to the first aspect or the second aspect, in some implementations of the first aspect or the second aspect, the third channel bandwidth is a maximum channel bandwidth supported by a first frequency range FR1.

Based on the foregoing technical solution, the second correspondence may be a correspondence between a channel bandwidth and a guard band designed for the FR1. Therefore, the third channel bandwidth may be the maximum channel bandwidth supported by the FR1. To be specific, guard bands corresponding to other channel bandwidths are designed by using a guard band corresponding to the maximum channel bandwidth supported by the FR1 as a reference.

With reference to the first aspect or the second aspect, in some implementations of the first aspect or the second aspect, at the first subcarrier spacing, a minimum channel bandwidth in the M channel bandwidths is a fourth channel bandwidth, the fourth channel bandwidth corresponds to a fourth guard band, and guard bands corresponding to other channel bandwidths in the M channel bandwidths other than the fourth channel bandwidth are all greater than or equal to the fourth guard band.

Based on the foregoing technical solution, that at the first subcarrier spacing, in the second correspondence, the minimum channel bandwidth is the fourth channel bandwidth may be understood as that the fourth guard band corresponding to the fourth channel bandwidth is used as a reference, and the guard band corresponding to the channel bandwidth at the first subcarrier spacing should be greater than or equal to the fourth guard band, so that guard bands corresponding to different channel bandwidths satisfy a monotonic non-decrease rule as the channel bandwidths increase.

With reference to the first aspect or the second aspect, in some implementations of the first aspect or the second aspect, the fourth channel bandwidth is a minimum channel bandwidth supported by the first frequency range FR1.

Based on the foregoing technical solution, the second correspondence may be a correspondence between a channel bandwidth and a guard band designed for the FR1. Therefore, the fourth channel bandwidth may be the minimum channel bandwidth supported by the FR1. To be specific, guard bands corresponding to other channel bandwidths are designed by using a guard band corresponding to the minimum channel bandwidth supported by the FR1 as a reference.

With reference to the first aspect or the second aspect, in some implementations of the first aspect or the second aspect, the maximum channel bandwidth in the M channel bandwidths is the third channel bandwidth, the minimum channel bandwidth in the M channel bandwidths is the fourth channel bandwidth, the third channel bandwidth corresponds to the third guard band, the fourth channel bandwidth corresponds to the fourth guard band, and guard bands corresponding to other channel bandwidths in the plurality of channel bandwidths other than the third channel bandwidth and the fourth channel bandwidth are all less than or equal to the third guard band and greater than or equal to the fourth guard band.

Based on the foregoing technical solution, that at the first subcarrier spacing, in the second correspondence, the maximum channel bandwidth is the third channel bandwidth, and the minimum channel bandwidth is the fourth channel bandwidth may be understood as that the third guard band corresponding to the third channel bandwidth and the fourth guard band corresponding to the fourth channel bandwidth are used as references, and the guard band corresponding to the channel bandwidth at the first subcarrier spacing should be less than or equal to the third guard band and greater than or equal to the fourth guard band, so that guard bands corresponding to different channel bandwidths satisfy a monotonic non-decrease rule as the channel bandwidths increase.

With reference to the first aspect or the second aspect, in some implementations of the first aspect or the second aspect, at the first subcarrier spacing, a smallest guard band in the M guard bands is a fifth guard band, the fifth guard band corresponds to a fifth channel bandwidth, a guard band corresponding to a channel bandwidth less than the fifth channel bandwidth in the M channel bandwidths is less than or equal to the fifth guard band, and a guard band corresponding to a channel bandwidth greater than the fifth channel bandwidth in the M channel bandwidths is greater than or equal to the fifth guard band.

Based on the foregoing technical solution, that at the first subcarrier spacing, in the second correspondence, the smallest guard band is the fifth guard band may be understood as that the fifth guard band is used as a reference, a guard band corresponding to a channel bandwidth less than the fifth channel bandwidth in other channel bandwidths is less than or equal to the fifth guard band, and a guard band corresponding to a channel bandwidth greater than the fifth channel bandwidth is greater than or equal to the fifth guard band, so that guard bands corresponding to different channel bandwidths satisfy a monotonic non-decrease rule as the channel bandwidths increase.

With reference to the first aspect or the second aspect, in some implementations of the first aspect or the second aspect, at the first subcarrier spacing, a largest guard band in the M guard bands is a sixth guard band, the sixth guard band corresponds to a sixth channel bandwidth, a guard band corresponding to a channel bandwidth less than the sixth channel bandwidth in the M channel bandwidths is less than or equal to the sixth guard band, and a guard band corresponding to a channel bandwidth greater than the sixth channel bandwidth in the M channel bandwidths is greater than or equal to the sixth guard band.

Based on the foregoing technical solution, that at the first subcarrier spacing, in the second correspondence, the largest guard band is the sixth guard band may be understood as that the sixth guard band is used as a reference, a guard band corresponding to a channel bandwidth less than the sixth channel bandwidth in other channel bandwidths is less than or equal to the sixth guard band, and a guard band corresponding to a channel bandwidth greater than the sixth channel bandwidth is greater than or equal to the sixth guard band, so that guard bands corresponding to different channel bandwidths satisfy a monotonic non-decrease rule as the channel bandwidths increase.

With reference to the first aspect or the second aspect, in some implementations of the first aspect or the second aspect, the second correspondence includes:

| | 1^{st} channel bandwidth | 2^{nd} channel bandwidth | ... | i^{th} channel bandwidth | ... | M^{th} channel bandwidth |
|---|---|---|---|---|---|---|
| 1^{st} subcarrier spacing | Guard band 1, 1 | Guard band 1, 2 | ... | Guard band 1, i | ... | Guard band 1, M |
| 2^{nd} subcarrier spacing | Guard band 2, 1 | Guard band 2, 2 | ... | Guard band 2, i | ... | Guard band 2, M |
| ... | | | | | | |
| j^{th} subcarrier spacing | Guard band j, 1 | Guard band j, 2 | ... | Guard band j, i | ... | Guard band j, M |
| ... | | | | | | |
| N^{th} subcarrier spacing | Guard band N, 1 | Guard band N, 2 | ... | Guard band N, i | ... | Guard band N, M |

In the table, a 1^{st} row represents different channel bandwidths, a 1^{st} column represents different subcarrier spacings, the guard band j, i represents a guard band corresponding to the i^{th} channel bandwidth at the j^{th} subcarrier spacing, N is a positive integer, i is greater than or equal to 1 and less than or equal to M, and j is greater than or equal to 1 and less than or equal to N; and the first subcarrier spacing is any one of N subcarrier spacings, the first channel bandwidth and the second channel bandwidth are any two of the M channel bandwidths, the first guard band is a guard band corresponding to the first channel bandwidth at the first subcarrier spacing, and the second guard band is a guard band corresponding to the second channel bandwidth at the first subcarrier spacing.

Based on the foregoing technical solution, the second correspondence may be represented in a form of a table. In this way, the terminal device and the network device can determine, by querying the table, guard bands corresponding to different channel bandwidths.

With reference to the first aspect or the second aspect, in some implementations of the first aspect or the second aspect, the first subcarrier spacing is 15 kilohertz kHz, the first channel bandwidth is 30 megahertz MHz, the second channel bandwidth is 40 MHz, and the first guard band and the second guard band are 552.5 kHz; or the first subcarrier spacing is 15 kHz, the first channel bandwidth is 45 MHz, the second channel bandwidth is 50 MHz, and the first guard band and the second guard band are 692.5 kHz; or the first subcarrier spacing is 30 kHz, the first channel bandwidth is 90 MHz, the second channel bandwidth is 100 MHz, and the first guard band and the second guard band are 845 kHz.

With reference to the first aspect or the second aspect, in some implementations of the first aspect or the second aspect, the first channel bandwidth, the first transmission bandwidth, and the first guard band satisfy the following relationship: ${GB}_{channel 1} = \left({BW}_{Channel 1}\times 1000\left(kHz\right)-{N}_{RB 1}\times SCS\times 12\right) / 2 - SCS / 2$

The second channel bandwidth, the second transmission bandwidth, and the second guard band satisfy the following relationship: ${GB}_{channel 2} = \left({BW}_{Channel 2}\times 1000\left(kHz\right)-{N}_{RB 2}\times SCS\times 12\right) / 2 - SCS / 2$

GB_{channel1} represents the first guard band, BW_{Channel1} represents the first channel bandwidth, N_{RB1} represents the first transmission bandwidth, GB_{channel2} represents the second guard band, BW_{Channel2} represents the second channel bandwidth, N_{RB2} represents the second transmission bandwidth, and SCS is the first subcarrier spacing.

Based on the foregoing technical solution, channel bandwidths, guard bands, and transmission bandwidths may satisfy existing formulas. To be specific, a correspondence between the transmission bandwidths and the channel bandwidths is designed, so that guard bands, corresponding to the channel bandwidths, obtained through calculation according to the existing formulas can still satisfy a monotonic non-decrease rule as the channel bandwidths increase.

According to a third aspect, a communication apparatus is provided. The communication apparatus is configured to perform the first aspect and any one of the implementations of the first aspect. Specifically, the communication apparatus includes a processor and a memory. The memory is configured to store a computer program. The processor is configured to invoke the computer program from the memory and run the computer program, to cause the communication apparatus to perform the first aspect and any one of the implementations of the first aspect.

In an implementation, the communication apparatus is a terminal device, and a transceiver unit may be a transceiver or an input/output interface. A processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, a transceiver unit may be an input/output interface, an interface circuit, an output circuit, an input circuit, a pin, a related circuit, or the like on the chip, the chip system, or the circuit; and a processing unit may be at least one processor, a processing circuit, a logic circuit, or the like.

According to a fourth aspect, a communication apparatus is provided. The communication apparatus is configured to perform the second aspect and any one of the implementations of the second aspect. Specifically, the communication apparatus includes a processor and a memory. The memory is configured to store a computer program. The processor is configured to invoke the computer program from the memory and run the computer program, to cause a network device to perform the second aspect and any one of the implementations of the second aspect.

In an implementation, the communication apparatus is the network device, and a transceiver unit may be a transceiver or an input/output interface. A processing unit may be at least one processor. Optionally, the transceiver may be a transceiver circuit. Optionally, the input/output interface may be an input/output circuit.

In another implementation, the communication apparatus may be a chip, a chip system, or a circuit in the network device. In this case, a transceiver unit may be an input/output interface, an interface circuit, an output circuit, an input circuit, a pin, a related circuit, or the like on the chip, the chip system, or the circuit; and a processing unit may be at least one processor, a processing circuit, a logic circuit, or the like.

According to a fifth aspect, a computer-readable storage medium is provided. The computer-readable storage medium stores a computer program. When the computer program is run, the method according to any one of the implementations of the first aspect and the second aspect is performed.

According to a sixth aspect, a computer program product including instructions is provided. When the computer program product is run, the method according to any one of the implementations of the first aspect and the second aspect is performed.

According to a seventh aspect, a chip is provided. The chip includes a processor and a communication interface. The processor reads instructions through the communication interface, to perform the method according to any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect and the second aspect.

According to an eighth aspect, a communication system is provided, and includes the communication apparatus according to the third aspect and the communication apparatus according to the fourth aspect.

According to a ninth aspect, a computer program is provided. When the computer program is run, the method according to any one of the implementations of the first aspect and the second aspect is performed.

### BRIEF DESCRIPTION OF DRAWINGS

FIG. 1 is a diagram of a communication system to which this application is applicable;
FIG. 2 is a diagram of a channel bandwidth and guard bands;
FIG. 3 is a diagram of different channel bandwidths;
FIG. 4 is a diagram of different channel bandwidths corresponding to different guard bands;
FIG. 5 is a schematic flowchart of a communication method according to an embodiment of this application;
FIG. 6 is a schematic block diagram of a communication apparatus according to an embodiment of this application;
FIG. 7 is a diagram of another communication apparatus according to an embodiment of this application; and
FIG. 8 is a diagram of a chip system according to an embodiment of this application.

### DESCRIPTION OF EMBODIMENTS

For ease of understanding of embodiments of this application, the following several points are described.

First, in this application, "indicating" may include directly indicating and indirectly indicating. When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periods and/or sending occasions of these pieces of sub-information may be the same or may be different. A specific sending method is not limited in this application. The sending periods and/or the sending occasions of these pieces of sub-information may be predefined, for example, predefined according to a protocol, or may be configured by a transmit-end device by sending configuration information to a receive-end device. The configuration information may include but is not limited to one or a combination of at least two of radio resource control (radio resource control, RRC) signaling, media access control (media access control, MAC) layer signaling, and physical layer signaling. The MAC layer signaling includes, for example, a MAC control element (control element, CE), and the physical layer signaling includes, for example, downlink control information (downlink control information, DCI).

Second, "at least one" in this application means one or more, and "a plurality of" means two or more. In addition, in embodiments of this application, "first", "second", and various numbers (for example, "#1" and "#2") are merely used for differentiation for ease of description, and are not intended to limit the scope of embodiments of this application. The sequence numbers of the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper circumstances, so that solutions other than embodiments of this application can be described. In addition, in embodiments of this application, the words such as "S510" and "S520" are merely identifiers for ease of description, and do not limit a sequence of performing steps.

Third, in this application, the word such as "example" or "for example" indicates providing an example, an illustration, or a description. Any embodiment or design scheme described as the "example" or "for example" in this application should not be explained as being more preferred or having more advantages than another embodiment or design scheme. Exactly, use of the word such as "example" or "for example" is intended to present a related concept in a specific manner.

Fourth, "storage" in embodiments of this application may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the "protocols" mentioned in embodiments of this application may be standard protocols in the communication field, for example, may include an LTE protocol, an NR protocol, and related protocols applied to a future communication system. This is not limited in this application.

Sixth, in embodiments of this application, "in a case in which", "when", and "if" may be interchangeably used sometimes. It should be noted that, when a difference between the terms is not emphasized, meanings to be expressed by the terms are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Ninth, "message", "information", "information element (information element, IE)", or the like in this specification may be used interchangeably. A name of the message or the information is not limited, provided that a corresponding function can be implemented.

The following describes in detail technical solutions in embodiments of this application with reference to the accompanying drawings.

The technical solutions in embodiments of this application are applicable to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application are also applicable to a future communication system, for example, a sixth generation mobile communication system. The technical solutions in embodiments of this application are further applicable to a device-to-device (device-to-device, D2D) communication system, a vehicle-to-everything (vehicle-to-everything, V2X) communication system, a machine-to-machine (machine-to-machine, M2M) communication system, a machine-type communication (machine-type communication, MTC) system, an internet of things (internet of things, IoT) communication system, or another communication system.

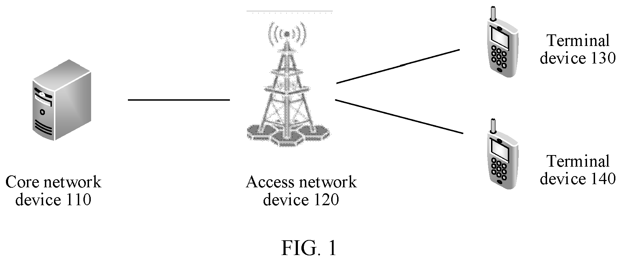

For ease of understanding of embodiments of this application, for example, a communication system to which this application is applicable is first described with reference to FIG. 1.

The mobile communication system includes a core network device 110, an access network device 120, and at least one terminal device (for example, a terminal device 130 and a terminal device 140 in the figure). The terminal devices are connected to the access network device, and the access network device is connected to the core network device. The core network device and the access network device may be different physical devices that are independent of each other, functions of the core network device and logical functions of the access network device may be integrated into a same physical device, or a part of the functions of the core network device and a part of the functions of the access network device may be integrated into one physical device. The terminal devices may be located at fixed positions, or may be mobile. FIG. 1 is only a diagram. The communication system may further include other network devices, for example, a wireless relay device and a wireless backhaul device, which are not shown in FIG. 1.

In embodiments of this application, quantities of core network devices, access network devices, and terminal devices included in the mobile communication system are not limited. Alternatively, the mobile communication system includes a core network device, at least two access network devices, and at least one terminal device.

A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not merely a hardware device, but implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the wearable intelligent device may alternatively be a portable device that is dedicated to only one type of application function and needs to be used in cooperation with another device such as a smartphone, for example, various smart bands or smart jewelry for monitoring physical signs.

In addition, in embodiments of this application, the terminal device may alternatively be a terminal device in an IoT system. IoT is an important part of future information technology development. A main technical feature of the IoT is to connect things to a network by using a communication technology, to implement a smart network for human-machine interconnection and thing-thing interconnection. In embodiments of this application, the IoT technology can implement massive connections, deep coverage, and terminal power saving by using, for example, a narrowband (narrowband, NB) technology.

In addition, in embodiments of this application, the terminal device may alternatively include a sensor, and main functions include collecting data (some terminal devices), receiving control information and downlink data from a network device, sending an electromagnetic wave, and transmitting uplink data to the network device.

An access network device in embodiments of this application may be any communication device that has a wireless transceiver function and that is configured to communicate with a terminal device. The device includes but is not limited to: an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the device may be a gNB or a transmission point (TRP or TP) in a 5G system such as an NR system, may be one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In different systems, the CU (or the CU-CP and the CU-UP), the DU, or the RU may alternatively have different names, but a person skilled in the art may understand meanings thereof. For example, a radio access network may also be of an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any of the CU (or the CU-CP or the CU-UP), the DU, and the RU in this application may be implemented by a software module, a hardware module, or a combination of a software module and a hardware module.

The access network device and the terminal device may be deployed on land, and include an indoor or outdoor device, a handheld device, or a vehicle-mounted device; may be deployed on water; or may be deployed on a plane, a balloon, or a satellite in air. Scenarios in which the access network device and the terminal device are located are not limited in this embodiment of this application.

In embodiments of this application, the terminal device, the access network device, or the core network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that is accessible from any computer-readable device, carrier or medium. For example, the computer-readable medium includes but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

For ease of understanding of embodiments of this application, some basic concepts used in this application are briefly described.
1. Channel bandwidth: A plurality of different channel bandwidths are defined in an FR1, and include but are not limited to a plurality of different sizes of channel bandwidths such as 3 MHz, 5 MHz, 10 MHz, 15 MHz, 20 MHz, 25 MHz, 30 MHz, 35 MHz, 40 MHz, 45 MHz, 50 MHz, 60 MHz, 70 MHz, 80 MHz, 90 MHz, and 100 MHz.

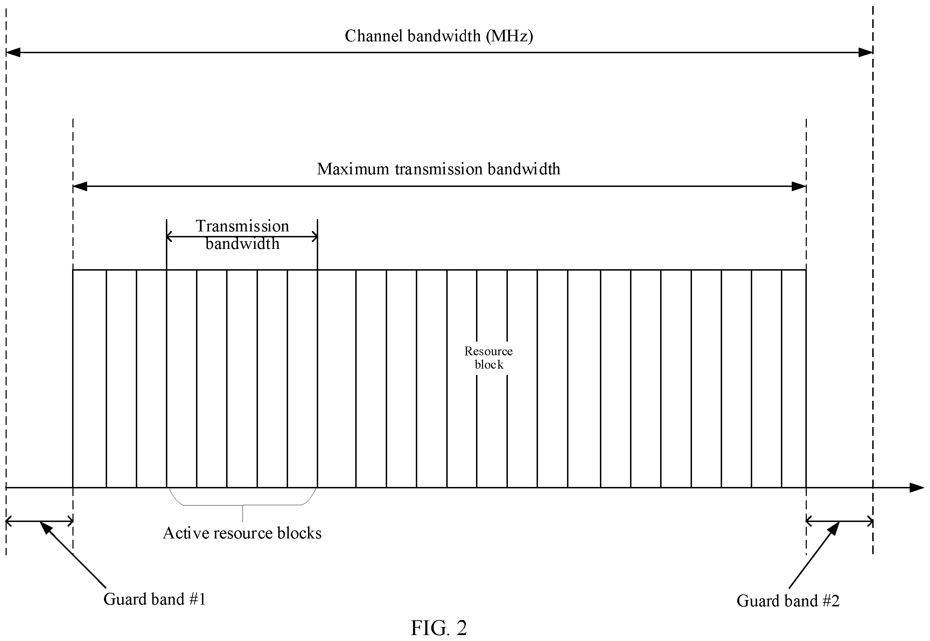

Specifically, each channel bandwidth corresponds to one guard band. For example, a relationship between a channel bandwidth and guard bands are shown in FIG. 2.

It can be learned from FIG. 2 that, the channel bandwidth is greater than a maximum transmission bandwidth, the channel bandwidth includes the maximum transmission bandwidth and the guard bands (a guard band #1 and a guard band #2 shown in FIG. 2), and an actual transmission bandwidth is active resource blocks (active resource blocks).

For example, the guard bands satisfy the following formula: ${GB}_{channel} = \left({BW}_{Channel}\times 1000\left(kHz\right)-{N}_{RB}\times SCS\times 12\right) / 2 - SCS / 2$ (1-1)

In the formula (1-1), GB_{channel} represents a guard band corresponding to the channel bandwidth, BW_{Channel} represents the channel bandwidth, N_{RB} represents the maximum transmission bandwidth corresponding to the channel bandwidth, and SCS is a subcarrier spacing (subcarrier spacing).

2. Association relationship between guard bands and channel bandwidths: It is defined in an existing protocol (release 18, R18) that at any subcarrier spacing, the guard bands are not monotonic as the channel bandwidths increase. In other words, at any subcarrier spacing, when the channel bandwidths increase, the guard bands corresponding to the channel bandwidths do not monotonically increase or monotonically decrease, but include both a case in which the guard bands increase as the bandwidths increase and a case in which the guard bands decrease as the channel bandwidths increase.

For example, at any subcarrier spacing, a correspondence between channel bandwidths and guard bands is shown in the following Table 1.

**Table 1 At different subcarrier spacings, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 592.5 | 572.5 | 552.5 | 712.5 | 692.5 | N/A | N/A | N/A | N/A | N/A |
| 30 | N/A | 505 | 665 | 645 | 805 | 785 | 945 | 925 | 905 | 1065 | 1045 | 825 | 965 | 925 | 885 | 845 |
| 60 | N/A | N/A | 1010 | 990 | 1330 | 1310 | 1290 | 1630 | 1610 | 1590 | 1570 | 1530 | 1490 | 1450 | 1410 | 1370 |

It can be learned from Table 1 that when the subcarrier spacing is 15 kHz, if the channel bandwidth is 3 MHz, the minimum guard band corresponding to the channel bandwidth is 142.5 kHz; if the channel bandwidth is 5 MHz, the minimum guard band corresponding to the channel bandwidth is 242.5 kHz; if the channel bandwidth is 10 MHz, the minimum guard band corresponding to the channel bandwidth is 312.5 kHz; or the like. For the correspondence between the guard bands and the channel bandwidths, refer to Table 1. Details are not described herein again.

3. Maximum transmission bandwidth configuration: At any subcarrier spacing, one channel bandwidth corresponds to one maximum transmission bandwidth. At the any subcarrier spacing, each channel bandwidth has a maximum transmission bandwidth corresponding to the channel bandwidth. Therefore, a corresponding channel bandwidth may be determined based on a maximum transmission bandwidth.

For example, at any subcarrier spacing, a correspondence between maximum transmission bandwidths and channel bandwidths is shown in the following Table 2.

**Table 2 Maximum transmission bandwidth configurations N_{RB}**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 15 | 25 | 52 | 79 | 106 | 133 | 160 | 188 | 216 | 242 | 270 | N/A | N/A | N/A | N/A | N/A |
| 30 | N/A | 11 | 24 | 38 | 51 | 65 | 78 | 92 | 106 | 119 | 133 | 162 | 189 | 217 | 245 | 273 |
| 60 | N/A | N/A | 11 | 18 | 24 | 31 | 38 | 44 | 51 | 58 | 65 | 79 | 93 | 107 | 121 | 135 |

It can be learned from Table 2 that when the subcarrier spacing is 15 kHz, if the maximum transmission bandwidth is 15 RBs, the channel bandwidth is 3 MHz; if the maximum transmission bandwidth is 25 RBs, the channel bandwidth is 5 MHz; if the maximum transmission bandwidth is 52 RBs, the channel bandwidth is 10 MHz; or the like. For the correspondence between the channel bandwidths and the maximum transmission bandwidths, refer to Table 2. Details are not described herein again.

With reference to FIG. 1, the foregoing briefly describes the scenarios to which a communication method provided in embodiments of this application can be applied, describes the basic concepts that may be used in embodiments of this application, and describes the channel bandwidth in the basic concepts. A manner of determining the channel bandwidth is that a network device configures a cell-level channel bandwidth through signaling, and a terminal device determines the channel bandwidth based on a maximum transmission bandwidth and determines a corresponding guard band based on the channel bandwidth.

For example, the manner of determining the channel bandwidth includes the following steps.

Step 1: The network device configures a position of a cell resource block 0 (cell resource block 0, CRB0), a subcarrier spacing, and the maximum transmission bandwidth by using a downlink frequency information-system information block (FrequencyInfoDL-SIB) in a system information block 1 (System information block 1, SIB1), where the position of the CRB0 is a position of a carrier frequency. For example, an offsetToPointA field in FrequencyInfoDL-SIB indicates the position of the CRB0. In addition, the maximum transmission bandwidth may be determined by selecting a carrier with a maximum carrier bandwidth from scs-SpecificCarrierList in FrequencyInfoDL-SIB.

Specifically, a signaling format of FrequencyInfoDL-SIB is shown as follows:

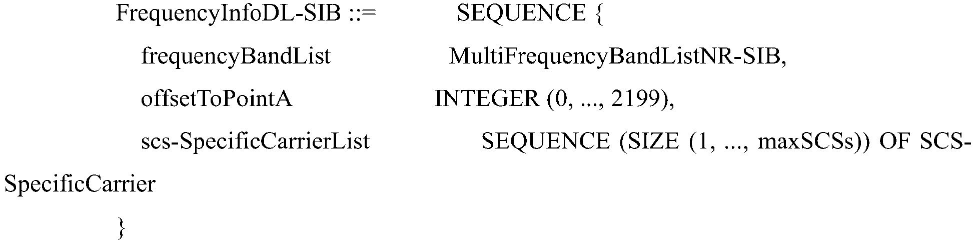

A signaling format of SCS-SpecificCarrierList is as follows:

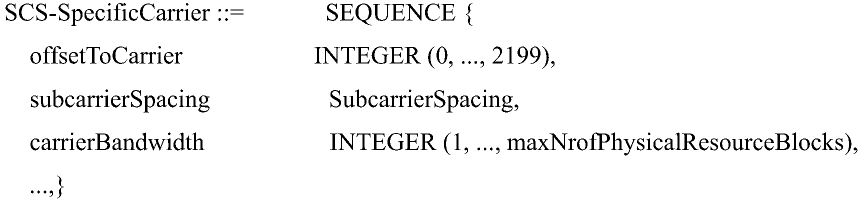

Step 2: The terminal device determines the maximum carrier bandwidth (namely, the maximum transmission bandwidth) based on the FrequencyInfoDL-SIB field in the received SIB1. Further, the terminal device may determine the channel bandwidth by querying Table 2 based on the maximum transmission bandwidth, and determine the corresponding guard band by querying Table 1 based on the channel bandwidth.

It should be noted that, after the terminal device accesses a network, the network device configures a BWP, and the terminal device performs transmission only in an active BWP, where the BWP is less than or equal to the cell-level channel bandwidth. To enable the terminal device to determine a specific channel bandwidth for satisfying a corresponding radio frequency indicator (for example, a guard band size), the network device may configure a dedicated transmission bandwidth for the terminal device.

It can be learned from the foregoing descriptions that, in actual network deployment, a channel bandwidth of the terminal device is less than the cell-level channel bandwidth, but there may be a case in which the terminal device cannot successfully access a cell.

For example, an operator A obtains a 40 MHz channel bandwidth in a frequency band n28, a filter design for the terminal device on the frequency band n28 is 30 MHz, and the terminal device accesses a cell with the 40 MHz channel bandwidth by using a 30 MHz channel bandwidth.

As shown in Table 1, the guard band corresponding to the 40 MHz channel bandwidth is less than the guard band of the 30 MHz channel bandwidth. For example, 552.5 kHz<592.5 kHz.

Optionally, for a position of a CRB0 of the terminal device, refer to a point A position configured by using the SIB1, and the terminal device determines that the guard band of the 30 MHz channel bandwidth exceeds the 40 MHz channel bandwidth, and cannot access the cell. Alternatively, after the terminal device enters a connected mode, the network device configures a dedicated 30 MHz channel bandwidth cell for the terminal device, and a guard bandwidth of the 30 MHz cell has exceeded a frequency range of a 40 MHz cell in the SIB1.

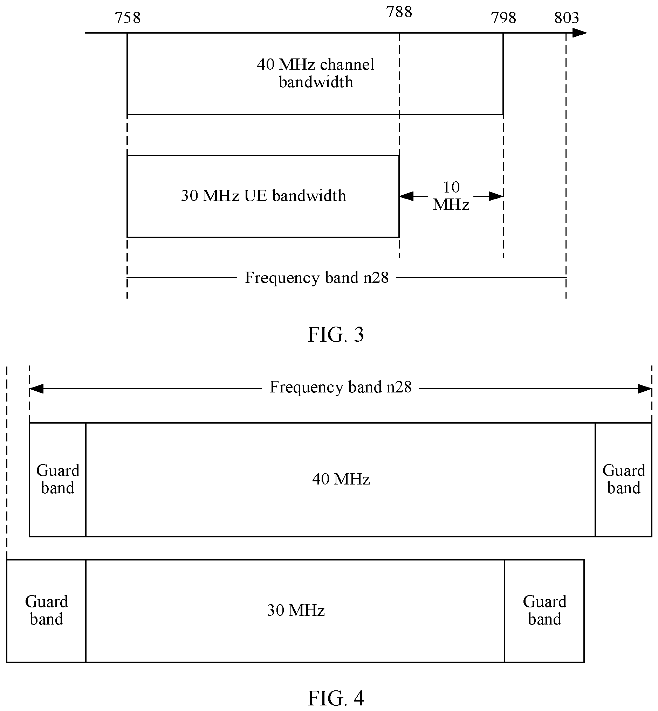

For ease of understanding, with reference to FIG. 3 and FIG. 4, it is stated that if guard bands corresponding to different channel bandwidths do not monotonically increase as the channel bandwidths increase, a case in which a terminal device cannot access a cell may occur.

As shown in FIG. 3, a frequency band n28 corresponds to a 40 MHz channel bandwidth (40 MHz between 758 MHz and 798 MHz shown in FIG. 3), and a channel bandwidth corresponding to a terminal device in the frequency band n28 is 30 MHz (30 MHz between 758 MHz and 788 MHz shown in FIG. 3). Further, considering that a guard band size corresponding to the 40 MHz channel bandwidth is 552.5 kHz, and a guard band size corresponding to the 30 MHz channel bandwidth is 592.5 kHz, a start position of the 30 MHz channel bandwidth is 757.96 MHz shown in FIG. 4. In this case, a guard band of the 30 MHz channel bandwidth corresponding to the terminal device exceeds a valid spectrum of an operator. As a result, the terminal device cannot access a cell.

To resolve the foregoing problem that the terminal device cannot access the cell, this application provides a communication method. Guard band sizes are set to monotonically nondecreasing as channel bandwidths increase, so that a terminal device can access a cell when a channel bandwidth of the terminal device is less than a cell-level bandwidth.

It should be understood that the communication method provided in embodiments of this application is applicable to a system that performs communication by using a multi-antenna technology, for example, the communication system 100 shown in FIG. 1. The communication system may include at least one network device and at least one terminal device.

It should be further understood that a specific structure of an entity for performing the method provided in embodiments of this application is not particularly limited in embodiments described below, provided that the entity can run a program that records code of the method provided in embodiments of this application to perform communication according to the method provided in embodiments of this application. For example, the entity for performing the method provided in embodiments of this application may be a terminal device, or may be a functional module that is in the terminal device and can invoke and execute the program.

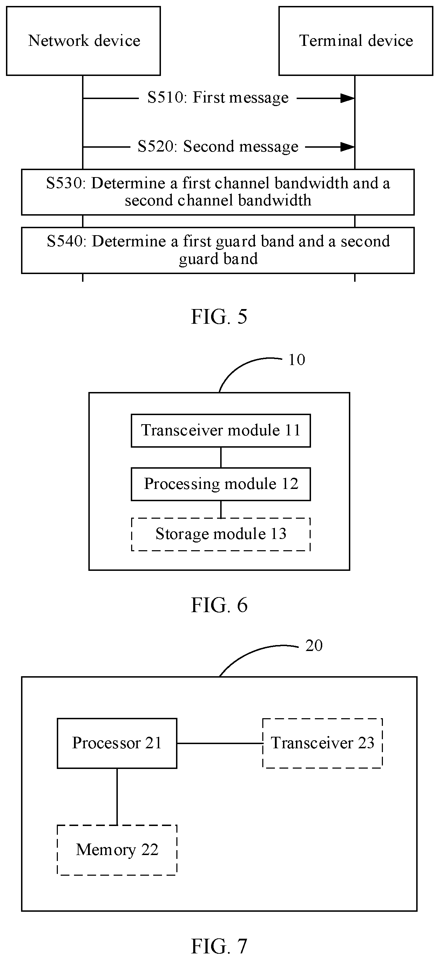

FIG. 5 is a schematic flowchart of a communication method according to an embodiment of this application, including the following steps.

S510: A network device sends a first message to a terminal device, and correspondingly, the terminal device receives the first message from the network device.

Specifically, the first message indicates a first subcarrier spacing and a first transmission bandwidth. For example, the first message indicates that the first subcarrier spacing is 15 kHz and the first transmission bandwidth is 160 RBs. The first transmission bandwidth in this embodiment is a maximum transmission bandwidth at the first subcarrier spacing.

For example, the first message is a SIB1 #1, a frequency domain position of a carrier is configured in FrequencyInfoDL-SIB in the SIB1 #1, and the first transmission bandwidth is determined by a carrier with a maximum carrier bandwidth in scs-SpecificCarrierList in FrequencyInfoDL-SIB. In addition, the first subcarrier spacing may be determined based on a SubcarrierSpacing field in the SIB1 #1.

S520: The network device sends a second message to the terminal device, and correspondingly, the terminal device receives the second message from the network device.

Specifically, the second message indicates the first subcarrier spacing and a second transmission bandwidth. For example, the second message indicates that the first subcarrier spacing is 15 kHz and the second transmission bandwidth is 216 RBs. The second transmission bandwidth in this embodiment is a maximum transmission bandwidth at the first subcarrier spacing.

For example, the second message is a SIB1 #2, the frequency domain position of the carrier is configured in FrequencyInfoDL-SIB in the SIB1 #2, and the second transmission bandwidth is determined by the carrier with the maximum carrier bandwidth in scs-SpecificCarrierList in FrequencyInfoDL-SIB. In addition, the first subcarrier spacing may be determined based on a SubcarrierSpacing field in the SIB1 #2.

Further, in this embodiment, after the terminal device receives the first message and the second message, the terminal device and the network device may determine a first channel bandwidth based on the first subcarrier spacing and the first transmission bandwidth indicated by the first message, and determine a second channel bandwidth based on the first subcarrier spacing and the second transmission bandwidth indicated by the second message. In this case, the method procedure shown in FIG. 5 further includes the following step.

S530: The terminal device and the network device determine the first channel bandwidth and the second channel bandwidth.

For example, in this embodiment, channel bandwidths and transmission bandwidths satisfy a first correspondence. The first correspondence includes, at any subcarrier spacing, a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2. Subcarrier spacings included in the first correspondence include but are not limited to 15 kHz, 30 kHz, and 60 kHz.

For example, the first correspondence indicates a one-to-one correspondence between two transmission bandwidths (for example, a transmission bandwidth #1 and a transmission bandwidth #2) and two channel bandwidths (for example, a channel bandwidth #1 and a channel bandwidth #2) at a subcarrier spacing. For example, the first correspondence indicates that at a subcarrier spacing #1, the transmission bandwidth #1 corresponds to the channel bandwidth #1 and the transmission bandwidth #2 corresponds to the channel bandwidth #2.

In this embodiment, designs of the first correspondence include but are not limited to the following two manners.

Manner 1: The first correspondence is shown in Table 2 shown above. After determining the first transmission bandwidth, the terminal device and the network device may determine the first channel bandwidth by querying Table 2, and after determining the second transmission bandwidth, the terminal device and the network device may determine the second channel bandwidth by querying Table 2.

In the case shown in Manner 1, the first correspondence between the channel bandwidths and the transmission bandwidths may still be a correspondence, specified in an existing protocol, between the channel bandwidths and the maximum transmission bandwidths. Details are not described herein.

It should be understood that, in the case shown in Manner 1, that the first correspondence is shown in Table 2 is merely an example, and does not constitute any limitation on the protection scope of this application. The first correspondence may alternatively be in another form. For example, a maximum channel bandwidth in the first correspondence may be greater than 100 MHz. For another example, a minimum channel bandwidth in the first correspondence may be less than 3 MHz. For still another example, the subcarrier spacing in the first correspondence may be a subcarrier spacing other than the several subcarrier spacings shown in Table 2. Examples are not described herein.

Manner 2: The first correspondence in this embodiment is a correspondence different from that shown in Table 2 shown above. For example, the first correspondence in this embodiment may be shown in a newly defined Table 3. Table 3 indicates a relationship between the channel bandwidths and the transmission bandwidths. In addition, in this implementation, the channel bandwidths are determined based on the first correspondence, and guard bands determined based on the channel bandwidths and the transmission bandwidths satisfy a monotonic non-decrease rule as the channel bandwidths increase.

For example, when the SCS shown in Table 1 is 15 kHz, the guard band corresponding to the 35 MHz channel bandwidth is less than the guard band corresponding to the 30 MHz channel bandwidth according to the foregoing formula (1-1): ${GB}_{channel} = \left({BW}_{Channel}\times 1000\left(kHz\right)-{N}_{RB}\times SCS\times 12\right) / 2 - SCS / 2$

To ensure that the guard band corresponding to the 35 MHz channel bandwidth is not less than the guard band corresponding to the 30 MHz channel bandwidth, when the SCS is 15 kHz, if the maximum transmission bandwidth corresponding to the 35 MHz channel bandwidth is set to 187 RBs (for example, 188 RBs shown in Table 2 is changed to 187 RBs), the guard band corresponding to the 35 MHz channel bandwidth is increased to 662.5 kHz. In addition, in such a design, if the guard band corresponding to the 40 MHz channel bandwidth is 552.5 kHz, which is less than the 662.5 kHz guard band corresponding to the 35 MHz channel bandwidth, the maximum transmission bandwidth of the 40 MHz channel bandwidth is changed to 214 RBs, and correspondingly, the guard band corresponding to the 40 MHz channel bandwidth is changed to 732.5 kHz. In addition, in such a design, if the guard band corresponding to the 45 MHz channel bandwidth is 712.5 kHz, which is less than the 732.5 kHz guard band corresponding to the 40 MHz channel bandwidth, the maximum transmission bandwidth of the 45 MHz channel bandwidth is changed to 241 RBs, and correspondingly, the guard band corresponding to the 45 MHz channel bandwidth is changed to 802.5 kHz. In addition, in such a design, if the guard band corresponding to the 50 MHz channel bandwidth is 692.5 kHz, which is less than the 802.5 kHz guard band corresponding to the 45 MHz channel bandwidth, the maximum transmission bandwidth of the 50 MHz channel bandwidth is changed to 268 RBs, and correspondingly, the guard band corresponding to the 50 MHz channel bandwidth is changed to 872.5 kHz.

For another example, when the SCS shown in Table 1 is 30 kHz, the guard band corresponding to the 15 MHz channel bandwidth is less than the guard band corresponding to the 10 MHz channel bandwidth. To ensure that the guard band corresponding to the 15 MHz channel bandwidth is not less than the guard band corresponding to the 10 MHz channel bandwidth, when the SCS is 30 kHz, if the maximum transmission bandwidth corresponding to the 15 MHz channel bandwidth is changed from 38 RBs shown in Table 2 to 37 RBs, the guard band corresponding to the 15 MHz channel bandwidth is increased to 825 kHz. In addition, in such a design, if the guard band corresponding to the 20 MHz channel bandwidth is 805 kHz, which is less than the 825 kHz guard band corresponding to the 15 MHz channel bandwidth, the maximum transmission bandwidth of the 20 MHz channel bandwidth is changed to 50 RBs, and correspondingly, the guard band corresponding to the 20 MHz channel bandwidth is changed to 732.5 kHz. In addition, in such a design, if the guard band corresponding to the 25 MHz channel bandwidth is 785 kHz, which is less than the 985 kHz guard band corresponding to the 20 MHz channel bandwidth, the maximum transmission bandwidth of the 25 MHz channel bandwidth is changed to 63 RBs, and correspondingly, the guard band corresponding to the 25 MHz channel bandwidth is changed to 1145 kHz. In addition, in such a design, if the guard band corresponding to the 30 MHz channel bandwidth is 945 kHz, which is less than the 1145 kHz guard band corresponding to the 25 MHz channel bandwidth, the maximum transmission bandwidth of the 30 MHz channel bandwidth is changed to 76 RBs, and correspondingly, the guard band corresponding to the 30 MHz channel bandwidth is changed to 1305 kHz. If the maximum transmission bandwidth of the 35 MHz channel bandwidth is changed to 89 RBs, the guard band corresponding to the 35 MHz channel bandwidth is changed to 1465 kHz. If the maximum transmission bandwidth of the 40 MHz channel bandwidth is changed to 102 RBs, the guard band corresponding to the 40 MHz channel bandwidth is changed to 1445 kHz. If the maximum transmission bandwidth of the 45 MHz channel bandwidth is changed to 115 RBs, the guard band corresponding to the 45 MHz channel bandwidth is changed to 1445 kHz. If the maximum transmission bandwidth of the 50 MHz channel bandwidth is changed to 128 RBs, the guard band corresponding to the 50 MHz channel bandwidth is changed to 1945 kHz. If the maximum transmission bandwidth of the 60 MHz channel bandwidth is changed to 155 RBs, the guard band corresponding to the 60 MHz channel bandwidth is changed to 2085 kHz. If the maximum transmission bandwidth of the 70 MHz channel bandwidth is changed to 182 RBs, the guard band corresponding to the 70 MHz channel bandwidth is changed to 2225 kHz. If the maximum transmission bandwidth of the 80 MHz channel bandwidth is changed to 208 RBs, the guard band corresponding to the 80 MHz channel bandwidth is changed to 2225 kHz. If the maximum transmission bandwidth of the 90 MHz channel bandwidth is changed to 235 RBs, the guard band corresponding to the 90 MHz channel bandwidth is changed to 2225 kHz. If the maximum transmission bandwidth of the 100 MHz channel bandwidth is changed to 262 RBs, the guard band corresponding to the 100 MHz channel bandwidth is changed to 2225 kHz.

For another example, when the SCS shown in Table 1 is 60 kHz, the guard band corresponding to the 15 MHz channel bandwidth is less than the guard band corresponding to the 10 MHz channel bandwidth. To ensure that the guard band corresponding to the 15 MHz channel bandwidth is not less than the guard band corresponding to the 10 MHz channel bandwidth, when the SCS is 60 kHz, if the maximum transmission bandwidth corresponding to the 15 MHz channel bandwidth is changed from 38 RBs shown in Table 2 to 17 RBs, the guard band corresponding to the 15 MHz channel bandwidth is increased to 1350 kHz. If the maximum transmission bandwidth of the 20 MHz channel bandwidth is changed to 23 RBs, the guard band corresponding to the 20 MHz channel bandwidth is changed to 1690 kHz. If the maximum transmission bandwidth of the 25 MHz channel bandwidth is changed to 29 RBs, the guard band corresponding to the 25 MHz channel bandwidth is changed to 2000 kHz. If the maximum transmission bandwidth of the 30 MHz channel bandwidth is changed to 36 RBs, the guard band corresponding to the 30 MHz channel bandwidth is changed to 2010 kHz. If the maximum transmission bandwidth of the 35 MHz channel bandwidth is changed to 40 RBs, the guard band corresponding to the 35 MHz channel bandwidth is changed to 2350 kHz. If the maximum transmission bandwidth of the 40 MHz channel bandwidth is changed to 48 RBs, the guard band corresponding to the 40 MHz channel bandwidth is changed to 2690 kHz. If the maximum transmission bandwidth of the 45 MHz channel bandwidth is changed to 54 RBs, the guard band corresponding to the 45 MHz channel bandwidth is changed to 2690 kHz. If the maximum transmission bandwidth of the 50 MHz channel bandwidth is changed to 60 RBs, the guard band corresponding to the 50 MHz channel bandwidth is changed to 3370 kHz. If the maximum transmission bandwidth of the 60 MHz channel bandwidth is changed to 73 RBs, the guard band corresponding to the 60 MHz channel bandwidth is changed to 3690 kHz. If the maximum transmission bandwidth of the 70 MHz channel bandwidth is changed to 73 RBs, the guard band corresponding to the 70 MHz channel bandwidth is changed to 4010 kHz. If the maximum transmission bandwidth of the 80 MHz channel bandwidth is changed to 99 RBs, the guard band corresponding to the 80 MHz channel bandwidth is changed to 4330 kHz. If the maximum transmission bandwidth of the 90 MHz channel bandwidth is changed to 112 RBs, the guard band corresponding to the 90 MHz channel bandwidth is changed to 4650 kHz. If the maximum transmission bandwidth of the 100 MHz channel bandwidth is changed to 125 RBs, the guard band corresponding to the 100 MHz channel bandwidth is changed to 4970 kHz.

In this implementation, Table 2 shown above may be updated to the following Table 3.

**Table 3 Maximum transmission bandwidth configurations N_{RB}**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 15 | 25 | 52 | 79 | 106 | 133 | 160 | 187 | 214 | 241 | 268 | N/A | N/A | N/A | N/A | N/A |
| 30 | N/A | 11 | 24 | 37 | 50 | 64 | 76 | 89 | 103 | 115 | 128 | 158 | 182 | 208 | 235 | 262 |
| 60 | N/A | N/A | 11 | 17 | 23 | 29 | 36 | 42 | 48 | 54 | 60 | 73 | 86 | 100 | 112 | 125 |

Table 1 shown above may be updated to the following Table 4.

**Table 4 At different subcarrier spacings SCSs, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 592.5 | 662.5 | 732.5 | 802.5 | 872.5 | N/A | N/A | N/A | N/A | N/A |
| 30 | N/A | 505 | 665 | 825 | 985 | 1145 | 1305 | 1465 | 1625 | 1785 | 1945 | 2085 | 2225 | 2545 | 2685 | 2825 |
| 60 | N/A | N/A | 1010 | 1350 | 1690 | 2000 | 2010 | 2350 | 2690 | 3030 | 3370 | 3690 | 4010 | 4330 | 4650 | 4970 |

It should be understood that Table 3 and Table 4 are merely examples, and do not constitute any limitation on the protection scope of this application. Another design in which the foregoing guard bands satisfy the monotonic non-decrease rule as the channel bandwidths increase also fall within the protection scope of this application. Details are not described herein.

It should be further understood that Table 3 and Table 4 are obtained based on Table 2 shown above: Table 4 is obtained by adjusting Table 2, and Table 3 is designed according to the formula (1-1), so that the guard bands in Table 3 satisfy the monotonic non-decrease rule as the channel bandwidths increase. In this application, Table 4 may alternatively be directly configured, instead of being obtained by adjusting the existing Table 2. To be specific, how to obtain the first correspondence is not limited in this application, and the first correspondence may be determined based on an existing table (for example, Table 2), or may be preconfigured. No example is provided for description.

It should be further understood that a minimum guard bandwidth corresponding to any channel bandwidth and any subcarrier spacing in Table 3 or Table 4 is a possible example, and a value of one minimum guard bandwidth does not depend on a value of another minimum guard bandwidth. For example, the first correspondence may include only a part in Table 3, or may include values other than those shown in Table 3. Maximum transmission bandwidths corresponding to different channel bandwidths can make guard bands corresponding to the channel bandwidths satisfy the monotonic non-decrease rule as the channel bandwidths increase. For another example, a second correspondence may include only a part in Table 4, or may include values other than those shown in Table 4, provided that guard bands corresponding to channel bandwidths satisfy the monotonic non-decrease rule as the channel bandwidths increase.

Further, in this embodiment, after the terminal device determines the first channel bandwidth and the second channel bandwidth, the terminal device and the network device may determine a first guard band based on the first channel bandwidth and the second correspondence, and determine a second guard band based on the second channel bandwidth and the second correspondence. In this case, the method procedure shown in FIG. 5 further includes the following step.

S540: The terminal device and the network device determine the first guard band and the second guard band.

For example, in this embodiment, the channel bandwidths and the guard bands satisfy the second correspondence. The second correspondence includes a one-to-one correspondence between any one of the M channel bandwidths and one of M guard bands at any subcarrier spacing. The first guard band and the second guard band are two of the M guard bands, and M is an integer greater than or equal to 2.

For example, the second correspondence indicates a one-to-one correspondence between two channel bandwidths (for example, the channel bandwidth #1 and the channel bandwidth #2) and two guard bands (for example, a guard band #1 and a guard band #2) at a subcarrier spacing. For example, the second correspondence indicates that at the subcarrier spacing #1, the channel bandwidth #1 corresponds to the guard band #1 and the channel bandwidth #2 corresponds to the guard band #2. A guard band corresponding to a channel bandwidth may also be referred to as a minimum guard band, a minimum guard bandwidth, or the like. For example, the first guard band in this embodiment is a minimum guard band corresponding to the first channel bandwidth at the first subcarrier spacing, and the second guard band is a minimum guard band corresponding to the second channel bandwidth at the first subcarrier spacing.

For example, the terminal device stores the second correspondence. The second correspondence may be in a form of a table, a formula, or the like, to indicate that one channel bandwidth corresponds to one guard band.

By way of example but not limitation, the second correspondence may be represented in the form of the table, as shown in the following Table 5.

**Table 5 At different subcarrier spacings, channel bandwidths and minimum guard bands corresponding to the channel bandwidths**

| | 1^{st} channel bandwidth | 2^{nd} channel bandwidth | ... | i^{th} channel bandwidth | ... | M^{th} channel bandwidth |
|---|---|---|---|---|---|---|
| 1^{st} subcarrier spacing | Guard band 1, 1 | Guard band 1, 2 | ... | Guard band 1, i | ... | Guard band 1, M |
| 2^{nd} subcarrier spacing | Guard band 2, 1 | Guard band 2, 2 | ... | Guard band 2, i | ... | Guard band 2, M |
| ... | | | | | | |
| j^{th} subcarrier spacing | Guard band j, 1 | Guard band j, 2 | ... | Guard band j, i | ... | Guard band j, M |
| ... | | | | | | |
| N^{th} subcarrier spacing | Guard band N, 1 | Guard band N, 2 | ... | Guard band N, i | ... | Guard band N, M |

In the table, a 1^{st} row represents different channel bandwidths, a 1^{st} column represents different subcarrier spacings, the guard band j, i represents a guard band corresponding to the i^{th} channel bandwidth at the j^{th} subcarrier spacing, the first subcarrier spacing is any one of N subcarrier spacings, N is a positive integer, i is greater than or equal to 1 and less than or equal to M, and j is greater than or equal to 1 and less than or equal to N; and the first channel bandwidth and the second channel bandwidth are any two of the M channel bandwidths, the first guard band is a guard band corresponding to the first channel bandwidth at the first subcarrier spacing, and the second guard band is a guard band corresponding to the second channel bandwidth at the first subcarrier spacing.

By way of example but not limitation, when the first subcarrier spacing is 15 kHz, the first channel bandwidth is 30 MHz, and the second channel bandwidth is 40 MHz, the first guard band and the second guard band may be set to 552.5 kHz. Alternatively,
when the first subcarrier spacing is 15 kHz, the first channel bandwidth is 45 MHz, and the second channel bandwidth is 50 MHz, the first guard band and the second guard band may be set to 692.5 kHz. Alternatively,
when the first subcarrier spacing is 30 kHz, the first channel bandwidth is 90 MHz, and the second channel bandwidth is 100 MHz, the first guard band and the second guard band may be set to 845 kHz; or the like.

It should be noted that the foregoing several examples are merely examples and do not constitute any limitation on the protection scope of this application. In this embodiment, a value of the first subcarrier spacing, and a value of the first channel bandwidth and a value of the second channel bandwidth at the first subcarrier spacing are not limited, provided that the first guard band is less than or equal to the second guard band.

In this embodiment, the second correspondence indicates that the first channel bandwidth corresponds to the first guard band and the second channel bandwidth corresponds to the second guard band, where the first channel bandwidth is less than the second channel bandwidth, and the first guard band is less than or equal to the second guard band. In other words, the second correspondence indicates that at any SCS, the guard bands monotonically non-decrease as the channel bandwidths increase. For example, different channel bandwidths indicated by the second correspondence and guard bands corresponding to the channel bandwidths satisfy the following relationship: ${BW}_{Channel 1} < {BW}_{Channel 2} , and {GB}_{channel 1} \leq {GB}_{channel 2}$

BW_{Channel1} and BW_{Channel2} represent any two channel bandwidths in the second correspondence at a subcarrier spacing, BW_{Channel1} represents a channel bandwidth 1, BW_{Channel2} represents a channel bandwidth 2, GB_{channel1} represents a guard band 1 corresponding to the channel bandwidth 1, and GB_{channel2} represents a guard band 2 corresponding to the channel bandwidth 2. The channel bandwidth 2 is greater than the channel bandwidth 1, and the guard band 1 is less than or equal to the guard band 2.

It can be learned from the foregoing descriptions that, in this embodiment, a guard band corresponding to a low channel bandwidth is not greater than a guard band corresponding to a high channel bandwidth.

As shown in step S540, the correspondence between the channel bandwidths and the guard bands may be directly designed, so that the guard bands satisfy the monotonic non-decreased rule as the channel bandwidths increase. Alternatively, the correspondence between the channel bandwidths and the transmission bandwidths may be designed, so that guard bands obtained through calculation according to the calculation formula (1-1) satisfy the monotonic non-decrease rule as the channel bandwidths increase.

For ease of understanding, the following separately describes the foregoing two designs.

Manner 3: Corresponding to Manner 1 in step S520, to be specific, the correspondence between the channel bandwidths and the transmission bandwidths is still the correspondence specified in the existing protocol, the correspondence between the channel bandwidths and the guard bands is designed, so that the guard bands satisfy the monotonic non-decrease rule as the channel bandwidths increase.

For example, a manner of designing the correspondence between the channel bandwidths and the guard bands shown in Manner 3 includes but is not limited to the following several possible implementations.

In a possible implementation, in this embodiment, when the correspondence between the channel bandwidths and the guard bands is designed, at any subcarrier spacing, a guard band corresponding to the maximum channel bandwidth is used as a reference, and guard bands corresponding to other channel bandwidths are less than or equal to the guard band corresponding to the maximum channel bandwidth, so that the guard bands monotonically non-decrease as the channel bandwidths increase.

For example, at the first subcarrier spacing, a maximum channel bandwidth in the M channel bandwidths is a third channel bandwidth, the third channel bandwidth corresponds to a third guard band, and guard bands corresponding to other channel bandwidths in the M channel bandwidths other than the third channel bandwidth are all less than or equal to the third guard band.

Optionally, the third channel bandwidth is a maximum channel bandwidth supported by an FR1, or is the maximum channel bandwidth in Table 1. For example, the third channel bandwidth is 100 MHz.

For example, the guard band corresponding to 100 MHz (for example, when the subcarrier spacing is 30 kHz, the guard band is 845 Hz; or when the subcarrier spacing is 60 kHz, the guard band is 1370 Hz) is used as a maximum value, and the guard bands of the remaining channel bandwidths are ensured to monotonically non-decrease. This includes but is not limited to:

When the subcarrier spacing is 30 kHz, the guard band corresponding to the 90 MHz channel bandwidth is not greater than 845 kHz; when the subcarrier spacing is 30 kHz, the guard band corresponding to the 80 MHz channel bandwidth is not greater than 845 kHz; when the SCS is 15 kHz, the guard band corresponding to the 30 MHz channel bandwidth is not greater than 552.5 kHz; or the like.

By way of example but not limitation, when the first subcarrier spacing is 15 kHz, the first channel bandwidth is 30 MHz, and the second channel bandwidth is 40 MHz, the first guard band may be set to 552.5 kHz, and the second guard band may be set to 552.5 kHz. Alternatively,
when the first subcarrier spacing is 15 kHz, the first channel bandwidth is 45 MHz, and the second channel bandwidth is 50 MHz, the first guard band may be set to 692.5 kHz, and the second guard band may be set to 692.5 kHz. Alternatively,
when the first subcarrier spacing is 30 kHz, the first channel bandwidth is 90 MHz, and the second channel bandwidth is 100 MHz, the first guard band may be set to 845 kHz, and the second guard band may be set to 845 kHz; or the like.

Optionally, in this implementation, the second correspondence may be a case shown in the following Table 6.

**Table 6 At different subcarrier spacings SCSs, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 222.5 | 242.5 | 312.5 | 382.5 | 452.5 | 522.5 | 572.5 | 592.5 | 612.5 | 652.5 | 692.5 | N/A | N/A | N/A | N/A | N/A |
| 30 | N/A | 605 | 625 | 645 | 665 | 685 | 705 | 725 | 745 | 765 | 775 | 795 | 805 | 825 | 835 | 845 |
| 60 | N/A | N/A | 990 | 1010 | 1110 | 1130 | 1170 | 1190 | 1210 | 1250 | 1270 | 1290 | 1310 | 1350 | 1360 | 1370 |

It should be understood that Table 6 is merely an example, and does not constitute any limitation on the protection scope of this application. Another design that can make the guard bands satisfy the monotonic non-decrease rule as the channel bandwidths increase also falls within the protection scope of this application. Details are not described herein.

It should be further understood that a minimum guard bandwidth corresponding to any channel bandwidth and any subcarrier spacing in Table 6 is a possible example, and values of different minimum guard bandwidths do not depend on each other. For example, the second correspondence may include only a part in Table 6, or may include values other than those shown in Table 6, provided that the guard bands corresponding to the channel bandwidths satisfy the monotonic non-decrease rule as the channel bandwidths increase.

It should be noted that, in this implementation, the maximum channel bandwidth may alternatively be a standardized channel bandwidth greater than 100 MHz in the FR1 in a subsequent evolution process, including 200 MHz, 250 MHz, 300 MHz, 400 MHz, 500 MHz, 1 GHz, or the like. To be specific, a guard band corresponding to a channel bandwidth greater than 100 MHz may alternatively be used as a reference of guard bands, so that the guard bands monotonically non-decrease as the channel bandwidths increase.

In addition, in this implementation, the guard band as the reference may be determined according to the formula (1-1), and guard bands corresponding to other channel bandwidths may not satisfy the foregoing formula (1-1). For example, the guard band of the maximum channel bandwidth (100 MHz) is determined according to the calculation formula (1-1), provided that the guard bands of the other channel bandwidths are designed to satisfy the monotonic non-decrease rule as the channel bandwidths increase, without needing to be determined strictly according to the calculation formula (1-1).

In another possible implementation, in this embodiment, when the correspondence between the channel bandwidths and the guard bands is designed, at any subcarrier spacing, a guard band corresponding to the minimum channel bandwidth is used as a reference, and guard bands corresponding to other channel bandwidths is greater than or equal to the guard band corresponding to the minimum channel bandwidth, so that the guard bands monotonically non-decrease as the channel bandwidths increase.

For example, at the first subcarrier spacing, a minimum channel bandwidth in the M channel bandwidths is a fourth channel bandwidth, the fourth channel bandwidth corresponds to a fourth guard band, and guard bands corresponding to other channel bandwidths in the M channel bandwidths other than the fourth channel bandwidth are all greater than or equal to the fourth guard band.

Optionally, the fourth channel bandwidth is a minimum channel bandwidth supported by the first frequency range FR1, or is the minimum channel bandwidth in Table 1. For example, the fourth channel bandwidth is 3 MHz.

For example, the guard band corresponding to 3 MHz (for example, when the subcarrier spacing is 15 kHz, the guard band is 142.5 Hz) is used as a minimum value, and the guard bands of the remaining channel bandwidths are ensured to monotonically non-decrease.

For another example, the guard band (15 kHz SCS-312.5 Hz, 30 kHz SCS-382 Hz, or 60 kHz SCS-1310 Hz) corresponding to 10 MHz is used as a reference, and the guard bands of the remaining channel bandwidths greater than 10 MHz are ensured to monotonically non-decrease.

By way of example but not limitation, when the first subcarrier spacing is 30 kHz, the first channel bandwidth is 90 MHz, and the second channel bandwidth is 100 MHz, the first guard band and the second guard band may be set to not less than 665 kHz, and the first guard band is less than or equal to the second guard band. Alternatively,
when the first subcarrier spacing is 30 kHz, the first channel bandwidth is 15 MHz, and the second channel bandwidth is 20 MHz, the first guard band and the second guard band may be set to not less than 665 kHz, and the first guard band is less than or equal to the second guard band. Alternatively,
when the first subcarrier spacing is 15 kHz, the first channel bandwidth is 15 MHz, and the second channel bandwidth is 20 MHz, the first guard band and the second guard band may be set to not less than 312.5 kHz, and the first guard band is less than or equal to the second guard band; or the like.

Optionally, in this implementation, the second correspondence may be a case shown in the following Table 7.

**Table 7 At different subcarrier spacings, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 572.5 | 592.5 | 652.5 | 672.5 | 692.5 | N/A | N/A | N/A | N/A | N/A |
| 30 | N/A | 505 | 665 | 685 | 705 | 785 | 945 | 985 | 905 | 1065 | 1085 | 1125 | 1165 | 1225 | 1285 | 1345 |
| 60 | N/A | N/A | 1010 | 1090 | 1330 | 1350 | 1390 | 1630 | 1650 | 1690 | 1770 | 1830 | 1890 | 1950 | 2010 | 2070 |

It should be understood that Table 7 is merely an example, and does not constitute any limitation on the protection scope of this application. Another design that can make the guard bands satisfy the monotonic non-decrease rule as the channel bandwidths increase also falls within the protection scope of this application. Details are not described herein.

It should be further understood that a minimum guard bandwidth corresponding to any channel bandwidth and any subcarrier spacing in Table 7 is a possible example, and values of different minimum guard bandwidths do not depend on each other. For example, the second correspondence may include only a part in Table 7, or may include values other than those shown in Table 7, provided that the guard bands corresponding to the channel bandwidths satisfy the monotonic non-decrease rule as the channel bandwidths increase.

It should be noted that, in this implementation, the minimum bandwidth may alternatively be a standardized channel bandwidth less than 10 MHz in the FR1 in the subsequent evolution process, including: 3 MHz, 5 MHz, 1 MHz, or the like. To be specific, a guard band corresponding to a channel bandwidth less than 10 MHz may alternatively be used as a reference of guard bands, so that the guard bands monotonically non-decrease as the channel bandwidths increase.

In addition, in this implementation, the guard band as the reference may be determined according to the formula (1-1), and guard bands corresponding to other channel bandwidths may not satisfy the formula (1-1). For example, the guard band of the minimum channel bandwidth (10 MHz) is determined according to the calculation formula (1-1), provided that the guard bands of the other channel bandwidths are designed to satisfy the monotonic non-decrease rule as the channel bandwidths increase, without needing to be determined strictly according to the calculation formula (1-1).

In still another possible implementation, the second correspondence is determined based on a guard band, as a reference, corresponding to a channel bandwidth #A, and guard bands corresponding to channel bandwidths less than the channel bandwidth #A satisfy the monotonic non-decrease rule as the channel bandwidths increase. For example, the guard band #A corresponding to the channel bandwidth #A (for example, 5 MHz or 10 MHz) may be used as the reference, and a guard band corresponding to a channel bandwidth greater than the channel bandwidth #A is greater than or equal to the guard band #A.

It can be learned from Table 1 shown above that when channel bandwidths are greater than 10 MHz, guard band sizes may not be monotonic. The guard band corresponding to the 10 MHz channel bandwidth is used as the reference, and guard bands of remaining channel bandwidths are ensured to monotonically non-decrease.

For example, the guard band corresponding to 10 MHz (for example, when the subcarrier spacing is 15 kHz, the guard band is 312.5 Hz; when the subcarrier spacing is 30 kHz, the guard band is 665 Hz; or when the subcarrier spacing is 60 kHz, the guard band is 1010 Hz) is used as a minimum value, and the guard band corresponding to 100 MHz (for example, when the subcarrier spacing is 30 kHz, the guard band is 845 Hz; or when the subcarrier spacing is 60 kHz, the guard band is 1370 Hz) is used as a maximum value, the guard bands of the remaining channel bandwidths are ensured to monotonically non-decrease. This includes but is not limited to:

When the subcarrier spacing is 15 kHz, the guard band corresponding to the 30 MHz channel bandwidth is not less than 312.5 Hz;
when the subcarrier spacing is 30 kHz, the guard band corresponding to the 90 MHz channel bandwidth is not less than 665 Hz;
when the subcarrier spacing is 60 kHz, the guard band corresponding to the 15 MHz channel bandwidth is not less than 1010 Hz; or the like.

Optionally, in this implementation, Table 1 shown above may be updated to Table 7 shown above, and a difference from the guard band corresponding to the fourth channel bandwidth being used as a reference lies in that the channel bandwidth #A is not a minimum channel bandwidth, but a minimum channel bandwidth in channel bandwidths whose guard bands do not satisfy the monotonic non-decrease rule as the channel bandwidths increase in Table 1.

In still another possible implementation, in this embodiment, when the correspondence between the channel bandwidths and the guard bands is designed, at any subcarrier spacing, a guard band corresponding to the minimum channel bandwidth and a guard band corresponding to the maximum channel bandwidth are used as references, and guard bands corresponding to other channel bandwidths are greater than or equal to the guard band corresponding to the minimum channel bandwidth, and are less than or equal to the guard band corresponding to the maximum channel bandwidth, so that the guard bands monotonically non-decrease as the channel bandwidths increase.

For example, at the first subcarrier spacing, a maximum channel bandwidth in the M channel bandwidths is a third channel bandwidth, a minimum channel bandwidth in the M channel bandwidths is a fourth channel bandwidth, the third channel bandwidth corresponds to a third guard band, the fourth channel bandwidth corresponds to a fourth guard band, and guard bands corresponding to other channel bandwidths in the plurality of channel bandwidths other than the third channel bandwidth and the fourth channel bandwidth are all less than or equal to the third guard band and greater than or equal to the fourth guard band.

Optionally, the fourth channel bandwidth is a minimum channel bandwidth supported by the first frequency range FR1, or is the minimum channel bandwidth in Table 1. For example, the fourth channel bandwidth is 3 MHz.

Optionally, the third channel bandwidth is a maximum channel bandwidth supported by the FR1, or is the maximum channel bandwidth in Table 1. For example, the third channel bandwidth is 100 MHz.

It can be learned from Table 1 shown above that when channel bandwidths are greater than 10 MHz, guard band sizes may not be monotonic. The guard band corresponding to the 10 MHz channel bandwidth and the guard band corresponding to the 100 MHz channel bandwidth are used as references, and guard bands of channel bandwidths of remaining bandwidths monotonically non-decrease.

For example, the guard band corresponding to 10 MHz (for example, when the subcarrier spacing is 15 kHz, the guard band is 312.5 Hz; when the subcarrier spacing is 30 kHz, the guard band is 665 Hz; or when the subcarrier spacing is 60 kHz, the guard band is 1010 Hz) is used as a minimum value, and the guard band corresponding to 100 MHz (for example, when the subcarrier spacing is 30 kHz, the guard band is 845 Hz; or when the subcarrier spacing is 60 kHz, the guard band is 1370 Hz) is used as a maximum value, guard bands of remaining channel bandwidths are ensured to monotonically non-decrease. This includes but is not limited to:

When the subcarrier spacing is 30 kHz, the guard band corresponding to the 90 MHz channel bandwidth is not greater than 845 kHz and not less than 665 Hz; or when the subcarrier spacing is 60 kHz, the guard band corresponding to the 15 MHz channel bandwidth is not greater than 1370 kHz and not less than 1010 Hz.

By way of example but not limitation, when the first subcarrier spacing is 30 kHz, the first channel bandwidth is 90 MHz, and the second channel bandwidth is 100 MHz, the first guard band and the second guard band may be set to not greater than 845 kHz and not less than 665 kHz, and the first guard band is less than or equal to the second guard band. Alternatively,
when the first subcarrier spacing is 30 kHz, the first channel bandwidth is 15 MHz, and the second channel bandwidth is 20 MHz, the first guard band and the second guard band may be set to not greater than 845 kHz and not less than 665 kHz, and the first guard band is less than or equal to the second guard band. Alternatively,
when the first subcarrier spacing is 15 kHz, the first channel bandwidth is 15 MHz, and the second channel bandwidth is 20 MHz, the first guard band and the second guard band may be set to not greater than 1370 kHz and not less than 1010 Hz, and the first guard band is less than or equal to the second guard band; or the like.

Optionally, in this implementation, the second correspondence may be a case shown in the following Table 8.

**Table 8 At different subcarrier spacings, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 572.5 | 592.5 | 612.5 | 652.5 | 692.5 | N/A | N/A | N/A | N/A | N/A |
| 30 | N/A | 505 | 625 | 645 | 665 | 685 | 705 | 725 | 745 | 765 | 775 | 795 | 805 | 825 | 835 | 845 |
| 60 | N/A | N/A | 1010 | 1070 | 1110 | 1130 | 1170 | 1190 | 1210 | 1250 | 1270 | 1290 | 1310 | 1350 | 1360 | 1370 |

It should be understood that Table 8 is merely an example, and does not constitute any limitation on the protection scope of this application. Another design that can make the guard bands satisfy the monotonic non-decrease rule as the channel bandwidths increase also falls within the protection scope of this application. Details are not described herein.

It should be further understood that a minimum guard bandwidth corresponding to any channel bandwidth and any subcarrier spacing in Table 8 is a possible example, and values of different minimum guard bandwidths do not depend on each other. For example, the second correspondence may include only a part in Table 8, or may include values other than those shown in Table 8, provided that the guard bands corresponding to the channel bandwidths satisfy the monotonic non-decrease rule as the channel bandwidths increase.

In still another possible implementation, in this embodiment, when the correspondence between the channel bandwidths and the guard bands is designed, at any subcarrier spacing, a minimum guard band defined in a current protocol is used as a reference, and a channel bandwidth corresponding to the minimum guard band is the channel bandwidth #1. Guard bands corresponding to other channel bandwidths greater than the channel bandwidth #1 are greater than or equal to the minimum guard band, and guard bands corresponding to channel bandwidths less than the channel bandwidth #1 are less than or equal to the minimum guard band, so that the guard bands monotonically non-decrease as the channel bandwidths increase.

For example, at the first subcarrier spacing, a smallest guard band in the M guard bands is a fifth guard band, the fifth guard band corresponds to a fifth channel bandwidth, a guard band corresponding to a channel bandwidth less than the fifth channel bandwidth in the M channel bandwidths is less than or equal to the fifth guard band, and a guard band corresponding to a channel bandwidth greater than the fifth channel bandwidth in the M channel bandwidths is greater than or equal to the fifth guard band.

For example, when the subcarrier spacing in Table 1 is 15 kHz, the 142.5 kHz guard band corresponding to the 3 MHz channel bandwidth is the smallest guard band. Therefore, when the subcarrier spacing is 15 kHz, a guard band corresponding to a channel bandwidth greater than 3 MHz is not less than 142.5 kHz, and a guard band corresponding to a channel bandwidth less than 3 MHz is not greater than 142.5 kHz. Similarly, when the subcarrier spacing is 30 kHz, the 505 kHz guard band corresponding to the 5 MHz channel bandwidth is the smallest guard band. Therefore, when the subcarrier spacing is 30 kHz, a guard band corresponding to a channel bandwidth greater than 4 MHz is not less than 505 kHz, and a guard band corresponding to a channel bandwidth less than 4 MHz is not greater than 505 kHz. When the subcarrier spacing is 60 kHz, the 990 kHz guard band corresponding to the 15 MHz channel bandwidth is the smallest guard band. Therefore, when the subcarrier spacing is 60 kHz, a guard band corresponding to a channel bandwidth greater than 15 MHz is not less than 990 kHz, and a guard band corresponding to a channel bandwidth less than 15 MHz is not greater than 990 kHz.

By way of example but not limitation, when the first subcarrier spacing is 30 kHz, the first channel bandwidth is 90 MHz, and the second channel bandwidth is 100 MHz, the first guard band and the second guard band may be set to not less than 505 kHz, and the first guard band is less than or equal to the second guard band. Alternatively,
when the first subcarrier spacing is 30 kHz, the first channel bandwidth is 15 MHz, and the second channel bandwidth is 20 MHz, the first guard band and the second guard band may be set to not less than 505 kHz, and the first guard band is less than or equal to the second guard band. Alternatively,
when the first subcarrier spacing is 15 kHz, the first channel bandwidth is 15 MHz, and the second channel bandwidth is 20 MHz, the first guard band and the second guard band may be set to not less than 142.5 kHz, and the first guard band is less than or equal to the second guard band; or the like.

Optionally, in this implementation, the second correspondence may be a case shown in the following Table 9.

**Table 9 At different subcarrier spacings, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 572.5 | 592.5 | 612.5 | 652.5 | 692.5 | N/A | N/A | N/A | N/A | N/A |
| 30 | N/A | 505 | 625 | 645 | 665 | 685 | 705 | 725 | 745 | 765 | 775 | 795 | 805 | 825 | 835 | 845 |
| 60 | N/A | N/A | 960 | 990 | 1110 | 1130 | 1170 | 1190 | 1210 | 1250 | 1270 | 1290 | 1310 | 1350 | 1360 | 1370 |

It should be understood that Table 9 is merely an example, and does not constitute any limitation on the protection scope of this application. Another design that can make the guard bands satisfy the monotonic non-decrease rule as the channel bandwidths increase also falls within the protection scope of this application. Details are not described herein.

It should be further understood that a minimum guard bandwidth corresponding to any channel bandwidth and any subcarrier spacing in Table 9 is a possible example, and values of different minimum guard bandwidths do not depend on each other. For example, the second correspondence may include only a part in Table 8, or may include values other than those shown in Table 9, provided that the guard bands corresponding to the channel bandwidths satisfy the monotonic non-decrease rule as the channel bandwidths increase.

In still another possible implementation, in this embodiment, when the correspondence between the channel bandwidths and the guard bands is designed, at any subcarrier spacing, a minimum guard band defined in a current protocol is used as a reference, and a channel bandwidth corresponding to the minimum guard band is the channel bandwidth #1. Guard bands corresponding to other channel bandwidths greater than the channel bandwidth #1 are greater than or equal to the minimum guard band, and guard bands corresponding to channel bandwidths less than the channel bandwidth #1 are less than or equal to the minimum guard band, so that the guard bands monotonically non-decrease as the channel bandwidths increase.

For example, at the first subcarrier spacing, a largest guard band in the M guard bands is a sixth guard band, the sixth guard band corresponds to a sixth channel bandwidth, a guard band corresponding to a channel bandwidth less than the sixth channel bandwidth in the M channel bandwidths is less than or equal to the sixth guard band, and a guard band corresponding to a channel bandwidth greater than the sixth channel bandwidth in the M channel bandwidths is greater than or equal to the sixth guard band.

For example, when the subcarrier spacing in Table 1 is 15 kHz, the 712.5 kHz guard band corresponding to the 45 MHz channel bandwidth is a largest guard band. Therefore, when the subcarrier spacing is 15 kHz, a guard band corresponding to a channel bandwidth greater than 45 MHz is not less than 712.5 kHz, and a guard band corresponding to a channel bandwidth less than 45 MHz is not greater than 712.5 kHz. Similarly, when the subcarrier spacing is 30 kHz, the 1065 kHz guard band corresponding to the 45 MHz channel bandwidth is a largest guard band. Therefore, when the subcarrier spacing is 30 kHz, a guard band corresponding to a channel bandwidth greater than 45 MHz is not less than 1065 kHz, and a guard band corresponding to a channel bandwidth less than 45 MHz is not greater than 1065 kHz. Similarly, when the subcarrier spacing is 60 kHz, the 1630 kHz guard band corresponding to the 35 MHz channel bandwidth is a largest guard band. Therefore, when the subcarrier spacing is 60 kHz, a guard band corresponding to a channel bandwidth greater than 35 MHz is not less than 1630 kHz, and a guard band corresponding to a channel bandwidth less than 35 MHz is not greater than 1630 kHz.

By way of example but not limitation, when the first subcarrier spacing is 30 kHz, the first channel bandwidth is 90 MHz, and the second channel bandwidth is 100 MHz, the first guard band and the second guard band may be set to not greater than 1065 kHz, and the first guard band is less than or equal to the second guard band. Alternatively,
when the first subcarrier spacing is 30 kHz, the first channel bandwidth is 15 MHz, and the second channel bandwidth is 20 MHz, the first guard band and the second guard band may be set to not greater than 1065 kHz, and the first guard band is less than or equal to the second guard band. Alternatively,
when the first subcarrier spacing is 15 kHz, the first channel bandwidth is 15 MHz, and the second channel bandwidth is 20 MHz, the first guard band and the second guard band may be set to not greater than 712.5 kHz, and the first guard band is less than or equal to the second guard band; or the like.

Optionally, in this implementation, the second correspondence may be a case shown in the following Table 10.

**Table 10 At different subcarrier spacings, channel bandwidths and minimum guard bands corresponding to the channel bandwidths**

| SCS (kHz) | 3 MHz | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|---|
| 15 | 142.5 | 242.5 | 312.5 | 382.5 | 452.5 | 522.5 | 532.5 | 572.5 | 582.5 | 712.5 | 792.5 | N/A | N/A | N/A | N/A | N/A |
| 30 | N/A | 505 | 665 | 645 | 805 | 885 | 945 | 965 | 985 | 1065 | 1075 | 1085 | 1095 | 1100 | 1115 | 1130 |
| 60 | N/A | N/A | 1010 | 1090 | 1230 | 1250 | 1390 | 1630 | 1640 | 1670 | 1690 | 1700 | 1730 | 1750 | 1760 | 1770 |

It should be understood that Table 10 is merely an example, and does not constitute any limitation on the protection scope of this application. Another design that can make the guard bands satisfy the monotonic non-decrease rule as the channel bandwidths increase also falls within the protection scope of this application. Details are not described herein.

It should be further understood that a minimum guard bandwidth corresponding to any channel bandwidth and any subcarrier spacing in Table 10 is a possible example, and values of different minimum guard bandwidths do not depend on each other. For example, the second correspondence may include only a part in Table 10, or may include values other than those shown in Table 10, provided that the guard bands corresponding to the channel bandwidths satisfy the monotonic non-decrease rule as the channel bandwidths increase.

Manner 4: Corresponding to Manner 2 in step S530, to be specific, the correspondence between the channel bandwidths and the maximum transmission bandwidths is a newly defined correspondence, and the correspondence between the channel bandwidths and the maximum transmission bandwidths is changed, so that the guard bands satisfy the monotonic non-decrease rule as the channel bandwidths increase.

For example, in the case shown in Manner 4, after a channel bandwidth is determined based on the first correspondence, a guard band corresponding to the channel bandwidth may be determined based on the channel bandwidth and a maximum transmission bandwidth. Specifically, the guard band satisfies the following formula: ${GB}_{channel} = \left({BW}_{Channel}\times 1000\left(kHz\right)-{N}_{RB}\times SCS\times 12\right) / 2 - SCS / 2$ (1-1)

For example, the first channel bandwidth, the first transmission bandwidth, and the first guard band satisfy the following relationship: ${GB}_{channel 1} = \left({BW}_{Channel 1}\times 1000\left(kHz\right)-{N}_{RB 1}\times SCS\times 12\right) / 2 - SCS / 2$

The second channel bandwidth, the second transmission bandwidth, and the second guard band satisfy the following relationship: ${GB}_{channel 2} = \left({BW}_{Channel 2}\times 1000\left(kHz\right)-{N}_{RB 2}\times SCS\times 12\right) / 2 - SCS / 2$

GB_{channel1} represents the first guard band, BW_{Channel1} represents the first channel bandwidth, N_{RB1} represents the first transmission bandwidth, GB_{channel2} represents the second guard band, BW_{Channel2} represents the second channel bandwidth, N_{RB2} represents the second transmission bandwidth, and SCS is the first subcarrier spacing.

In other words, in the case shown in Manner 4, the correspondence between the channel bandwidths and the guard bands is shown in Table 4. After a channel bandwidth is determined, a guard band may be determined based on Table 4 and the channel bandwidth.

In this embodiment, after the terminal device accesses the network, the network device configures the BWP, and the terminal device performs transmit and receive transmission only in the active BWP, where the BWP is less than or equal to the cell-level bandwidth. Because the guard bands monotonically non-decrease as the channel bandwidths increase, a smaller bandwidth can definitely satisfy a radio frequency indicator of a larger bandwidth. Therefore, the network device may not need to configure a UE dedicated bandwidth.

In the communication method shown in FIG. 5, after receiving the first message indicating the first transmission bandwidth and the first subcarrier spacing, and the second message indicating the second transmission bandwidth and a second subcarrier spacing, the terminal device may determine, based on the predefined (for example, protocol-predefined) first correspondence, channel bandwidths corresponding to different transmission bandwidths, and determine, based on the determined channel bandwidths and the predefined (for example, protocol-predefined) second correspondence, guard bands corresponding to the different channel bandwidths. In this technical solution, in the second correspondence indicating a one-to-one correspondence between different channel bandwidths and guard bands, the guard bands corresponding to the channel bandwidths satisfy the monotonic non-decrease rule as the channel bandwidths increase (for example, the first channel bandwidth is less than the second channel bandwidth, and at the first carrier spacing, the first guard band corresponding to the first channel bandwidth is less than or equal to the second guard band corresponding to the first channel bandwidth). Therefore, it is avoided that when the channel bandwidth of the terminal device is less than the cell-level channel bandwidth, because a guard band corresponding to the channel bandwidth of the terminal device is greater than a guard band corresponding to the cell-level channel bandwidth, the terminal device cannot access the cell.

It should be understood that sequence numbers of the foregoing processes do not mean execution sequences. The execution sequences of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device (for example, a network device and a terminal device) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, the method and operations implemented by the device (for example, the network device or the terminal device) may alternatively be implemented by a component (for example, a chip or a circuit) of the device.

The foregoing describes in detail, with reference to FIG. 5, the communication method provided in embodiments of this application. The communication method is mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail, with reference to FIG. 6 to FIG. 8, communication apparatuses provided in this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit-end device or a receive-end device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. An example in which each functional module is obtained through division based on each corresponding function is used below for description.

FIG. 6 is a schematic block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform receiving and sending-related operations of the terminal device in the foregoing method embodiments, and the processing module 12 may be configured to perform processing-related operations of the terminal device in the foregoing method embodiments.

In a possible implementation, the transceiver module 11 is configured to receive a first message, where the first message indicates a first subcarrier spacing and a first transmission bandwidth. The transceiver module 11 is further configured to receive a second message, where the second message indicates the first subcarrier spacing and a second transmission bandwidth. The processing module 12 is configured to determine a first channel bandwidth based on the first transmission bandwidth and a first correspondence. The processing module 12 is further configured to determine a second channel bandwidth based on the second transmission bandwidth and the first correspondence. The first correspondence includes a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2.

The processing module 12 is further configured to determine a first guard band based on the first channel bandwidth and a second correspondence. The processing module 12 is further configured to determine a second guard band based on the second channel bandwidth and the second correspondence, where the second correspondence includes a one-to-one correspondence between any one of the M channel bandwidths and one of M guard bands, and the first guard band and the second guard band are two of the M guard bands, where the first channel bandwidth is less than the second channel bandwidth, and the first guard band is less than or equal to the second guard band.

When the apparatus 10 is configured to perform the method in FIG. 5, the transceiver module 11 may be configured to perform steps of receiving and sending information in the method, for example, steps S510 and S520; and the processing module 12 may be configured to perform processing steps in the method, for example, steps S530 and S540.

It should be understood that a specific process in which the units perform the foregoing corresponding steps is described in detail in the foregoing method embodiments, and for brevity, details are not described herein.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform receiving and sending-related operations of the network device in the foregoing method embodiments, and the processing module 12 may be configured to perform processing-related operations of the network device in the foregoing method embodiments.

In a possible implementation, the transceiver module 11 is configured to send a first message, where the first message indicates a first subcarrier spacing and a first transmission bandwidth. The transceiver module 11 is further configured to send a second message, where the second message indicates the first subcarrier spacing and a second transmission bandwidth. The processing module 12 is configured to determine a first channel bandwidth based on the first transmission bandwidth and a first correspondence. The processing module 12 is further configured to determine a second channel bandwidth based on the second transmission bandwidth and the first correspondence. The first correspondence includes a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2.

The processing module 12 is further configured to determine a first guard band based on the first channel bandwidth and a second correspondence. The processing module 12 is further configured to determine a second guard band based on the second channel bandwidth and the second correspondence, where the second correspondence includes a one-to-one correspondence between any one of the M channel bandwidths and one of M guard bands, and the first guard band and the second guard band are two of the M guard bands, where the first channel bandwidth is less than the second channel bandwidth, and the first guard band is less than or equal to the second guard band.

When the apparatus 10 is configured to perform the method in FIG. 5, the transceiver module 11 may be configured to perform steps of receiving and sending information in the method, for example, steps S510 and S520; and the processing module 12 may be configured to perform processing steps in the method, for example, steps S530 and S540.

It should be understood that a specific process in which the units perform the foregoing corresponding steps is described in detail in the foregoing method embodiments, and for brevity, details are not described herein.

It should be further understood that the apparatus 10 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by a device (for example, the terminal device or the network device) in the foregoing method. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 7, the apparatus 20 further includes a transceiver 23, and the transceiver 23 is configured to receive a signal and/or send a signal. For example, the processor 21 is configured to control the transceiver 23 to receive the signal and/or send the signal.

In a solution, the apparatus 20 is configured to implement operations performed by the terminal device in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (a storage module) may be integrated into the processor.

It should be further noted that, the memory described in this specification is intended to include but is not limited to these memories and any memory of another appropriate type.

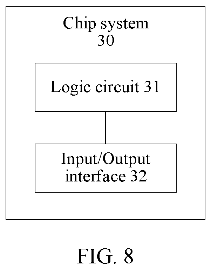

FIG. 8 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the method and functions in embodiments of this application. The input/output interface 32 may be an input/output circuit in the chip system 30, and may output information processed by the chip system 30, or input to-be-processed data or signaling information to the chip system 30 for processing.

In a solution, the chip system 30 is configured to implement operations performed by the terminal device in the foregoing method embodiments.

For example, the logic circuit 31 is configured to implement processing-related operations performed by the terminal device in the foregoing method embodiments, and the input/output interface 32 is configured to implement sending-related and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is caused to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content in any one of the apparatuses provided above, refer to the corresponding method embodiment provided above. Details are not described herein again.

A person of ordinary skill in the art may be aware that, with reference to the examples described in embodiments disclosed in this specification, units and algorithm steps can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely illustrative. For example, the unit division is merely logical function division, and actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first message, wherein the first message indicates a first subcarrier spacing and a first transmission bandwidth, and the first transmission bandwidth corresponds to the first subcarrier spacing;
receiving a second message, wherein the second message indicates the first subcarrier spacing and a second transmission bandwidth, and the second transmission bandwidth corresponds to the first subcarrier spacing;
determining a first channel bandwidth based on the first transmission bandwidth and a first correspondence, and determining a second channel bandwidth based on the second transmission bandwidth and the first correspondence, wherein the first correspondence comprises a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2; and
determining a first guard band based on the first channel bandwidth and a second correspondence, and determining a second guard band based on the second channel bandwidth and the second correspondence, wherein the second correspondence comprises a one-to-one correspondence between any one of the M channel bandwidths and one of M guard bands, and the first guard band and the second guard band are two of the M guard bands, wherein
the first channel bandwidth is less than the second channel bandwidth, and the first guard band is less than or equal to the second guard band.

2. A communication method, comprising:
sending a first message, wherein the first message indicates a first subcarrier spacing and a first transmission bandwidth, and the first transmission bandwidth corresponds to the first subcarrier spacing;
sending a second message, wherein the second message indicates the first subcarrier spacing and a second transmission bandwidth, and the second transmission bandwidth corresponds to the first subcarrier spacing;
determining a first channel bandwidth based on the first transmission bandwidth and a first correspondence, and determining a second channel bandwidth based on the second transmission bandwidth and the first correspondence, wherein the first correspondence comprises a one-to-one correspondence between any one of M transmission bandwidths and one of M channel bandwidths, the first transmission bandwidth and the second transmission bandwidth are any two of the M transmission bandwidths, the first channel bandwidth and the second channel bandwidth are two of the M channel bandwidths, and M is an integer greater than or equal to 2; and
determining a first guard band based on the first channel bandwidth and a second correspondence, and determining a second guard band based on the second channel bandwidth and the second correspondence, wherein the second correspondence comprises a one-to-one correspondence between any one of the M channel bandwidths and one of M guard bands, and the first guard band and the second guard band are two of the M guard bands, wherein
the first channel bandwidth is less than the second channel bandwidth, and the first guard band is less than or equal to the second guard band.

3. The method according to claim 1 or 2, wherein that the first correspondence comprises the one-to-one correspondence between the any one of the M transmission bandwidths and the one of the M channel bandwidths comprises:
the first correspondence comprises, at the first subcarrier spacing, the one-to-one correspondence between the any one of the M transmission bandwidths and the one of the M channel bandwidths.

4. The method according to any one of claims 1 to 3, wherein that the second correspondence comprises the one-to-one correspondence between the any one of the M channel bandwidths and the one of the M guard bands comprises:
the second correspondence comprises the one-to-one correspondence between the any one of the M channel bandwidths and the one of the M guard bands at the first subcarrier spacing.

5. The method according to any one of claims 1 to 4, wherein, at the first subcarrier spacing, a maximum channel bandwidth in the M channel bandwidths is a third channel bandwidth, the third channel bandwidth corresponds to a third guard band, and guard bands corresponding to other channel bandwidths in the M channel bandwidths other than the third channel bandwidth are all less than or equal to the third guard band.

6. The method according to claim 5, wherein the third channel bandwidth is a maximum channel bandwidth supported by a first frequency range FR1.

7. The method according to any one of claims 1 to 6, wherein, at the first subcarrier spacing, a minimum channel bandwidth in the M channel bandwidths is a fourth channel bandwidth, the fourth channel bandwidth corresponds to a fourth guard band, and guard bands corresponding to other channel bandwidths in the M channel bandwidths other than the fourth channel bandwidth are all greater than or equal to the fourth guard band.

8. The method according to claim 7, wherein the fourth channel bandwidth is a minimum channel bandwidth supported by the first frequency range FR1.

9. The method according to any one of claims 1 to 8, wherein, at the first subcarrier spacing, a smallest guard band in the M guard bands is a fifth guard band, the fifth guard band corresponds to a fifth channel bandwidth, a guard band corresponding to a channel bandwidth less than the fifth channel bandwidth in the M channel bandwidths is less than or equal to the fifth guard band, and a guard band corresponding to a channel bandwidth greater than the fifth channel bandwidth in the M channel bandwidths is greater than or equal to the fifth guard band.

10. The method according to any one of claims 1 to 9, wherein, at the first subcarrier spacing, a largest guard band in the M guard bands is a sixth guard band, the sixth guard band corresponds to a sixth channel bandwidth, a guard band corresponding to a channel bandwidth less than the sixth channel bandwidth in the M channel bandwidths is less than or equal to the sixth guard band, and a guard band corresponding to a channel bandwidth greater than the sixth channel bandwidth in the M channel bandwidths is greater than or equal to the sixth guard band.

11. The method according to any one of claims 1 to 10, wherein the second correspondence comprises:
| | 1^{st} channel bandwidth | 2^{nd} channel bandwidth | ... | i^{th} channel bandwidth | ... | M^{th} channel bandwidth |
|---|---|---|---|---|---|---|
| 1^{st} subcarrier spacing | Guard band 1, 1 | Guard band 1, 2 | ... | Guard band 1, i | ... | Guard band 1, M |
| 2^{nd} subcarrier spacing | Guard band 2, 1 | Guard band 2, 2 | ... | Guard band 2, i | ... | Guard band 2, M |
| ... | | | | | | |
| j^{th} subcarrier spacing | Guard band j, 1 | Guard band j, 2 | ... | Guard band j, i | ... | Guard band j, M |
| ... | | | | | | |
| N^{th} subcarrier spacing | Guard band N, 1 | Guard band N, 2 | ... | Guard band N, i | ... | Guard band N, M, wherein |
in the table, a 1^{st} row represents different channel bandwidths, a 1^{st} column represents different subcarrier spacings, the guard band j, i represents a guard band corresponding to the i^{th} channel bandwidth at the j^{th} subcarrier spacing, the first subcarrier spacing is any one of N subcarrier spacings, N is a positive integer, i is greater than or equal to 1 and less than or equal to M, and j is greater than or equal to 1 and less than or equal to N; and
the first channel bandwidth and the second channel bandwidth are any two of the M channel bandwidths, the first guard band is a guard band corresponding to the first channel bandwidth at the first subcarrier spacing, and the second guard band is a guard band corresponding to the second channel bandwidth at the first subcarrier spacing.

12. The method according to any one of claims 1 to 11, wherein the first subcarrier spacing is 15 kilohertz kHz, the first channel bandwidth is 30 megahertz MHz, the second channel bandwidth is 40 MHz, and the first guard band and the second guard band are 552.5 kHz; or
the first subcarrier spacing is 15 kHz, the first channel bandwidth is 45 MHz, the second channel bandwidth is 50 MHz, and the first guard band and the second guard band are 692.5 kHz; or
the first subcarrier spacing is 30 kHz, the first channel bandwidth is 90 MHz, the second channel bandwidth is 100 MHz, and the first guard band and the second guard band are 845 kHz.

13. The method according to claim 1 or 2, wherein the first channel bandwidth, the first transmission bandwidth, and the first guard band satisfy the following relationship: ${GB}_{channel 1} = \left({BW}_{Channel 1}\times 1000\left(kHz\right)-{N}_{RB 1}\times SCS\times 12\right) / 2 - SCS / 2 ; and$ the second channel bandwidth, the second transmission bandwidth, and the second guard band satisfy the following relationship: ${GB}_{channel 2} = \left({BW}_{Channel 2}\times 1000\left(kHz\right)-{N}_{RB 2}\times SCS\times 12\right) / 2 - SCS / 2 ,$ wherein GB_{channel1} represents the first guard band, BW_{Channel1} represents the first channel bandwidth, N_{RB1} represents the first transmission bandwidth, GB_{channel2} represents the second guard band, BW_{Channel2} represents the second channel bandwidth, N_{RB2} represents the second transmission bandwidth, and SCS is the first subcarrier spacing.

14. A communication apparatus, configured to implement the method according to claim 1 or any one of claims 3 to 13.

15. The communication apparatus according to claim 14, wherein the communication apparatus comprises a terminal device or a chip.

16. A communication apparatus, configured to implement the method according to any one of claims 2 to 13.

17. The communication apparatus according to claim 16, wherein the communication apparatus comprises a network device or a chip.

18. A computer-readable storage medium, wherein the computer-readable storage medium stores computer instructions, and when the computer instructions are run, the method according to any one of claims 1 to 13 is implemented.

19. A computer program product, wherein when the computer program product is run, the method according to any one of claims 1 to 13 is implemented.
